# EUROPÄISCHE PATENTANMELDUNG

(11) **EP 4 079 121 A1**
(43) Veröffentlichungstag der Anmeldung: **26.10.2022**
(21) Anmeldenummer: 22164293.7
(22) Anmeldetag: 25.03.2022
(51) Int. Cl.: A01B 19/04, A01B 23/04, A01B 49/02, A01B 61/04

(54) **ZINKENEINRICHTUNG UND BODENBEARBEITUNGSMASCHINE**

(30) Priorität: 31.03.2021 DE 102021108227
(71) Anmelder: Horsch Maschinen GmbH, 92421 Schwandorf (DE)
(72) Erfinder: HORSCH, Philipp, 92421 Schwandorf (DE)
(74) Vertreter: v. Bezold & Partner Patentanwälte - PartG mbB

(57) **Zusammenfassung**

Die Erfindung betrifft u.a. eine Zinkeneinrichtung (24) zur Auflockerung eines Bodens in einer Arbeitsrichtung (A2) für eine landwirtschaftliche Bodenbearbeitungsmaschine (10). Eine Länge (I) der Zinkeneinrichtung (24) gemessen bezüglich der Arbeitsrichtung (A2) ausgehend von einem hintersten Ende des Kontaktabschnitts (51) bis zu einem hintersten Ende des Zinkenstiels (38) ist größer oder im Wesentlichen gleich einer Höhe (h) der Zinkeneinrichtung (24) gemessen bezüglich einer Hochachse (H2) der Zinkeneinrichtung (24) ausgehend von einem untersten Ende des Kontaktabschnitts (51) bis zu einem untersten Ende des Schars (42).

## Beschreibung

Die Erfindung betrifft eine Bodenbearbeitungsmaschine und eine Zinkeneinrichtung für eine Bodenbearbeitungsmaschine.

Bodenbearbeitungsmaschinen können zum Lockern des Ackerbodens eingesetzt werden. Zum Lockern des Ackerbodens können hierfür sogenannte Zinken mit daran angebrachten Scharen vorgesehen sein. Herkömmlich sind alle Zinken einer Bodenauflockerungsvorrichtung identisch ausgeführt.

Die DE 92 10 389 U1 bezieht sich auf einen Grubber bzw. auf ein Bodenbearbeitungsgerät mit Zinkeneinrichtungen, Hohlscheiben-Zustreichern und einer Walze. Der Grubber ist als einbalkiger mehrreihiger Kurzgrubber mit drei vorderen und drei hinteren Zinken ausgebildet. Die vorderen und hinteren Zinken sind gleich ausgebildet. Die vorderen Zinken sind jeweils fest mit einem Rahmenträgerblech verbunden, das nach vorne von einem Rahmenquerbalken absteht. Die hinteren Zinken sind jeweils fest mit einem Rahmenträgerblech verbunden, das nach hinten von dem Rahmenquerbalken absteht.

Die DE 10 2005 005 939 A1 offenbart ein landwirtschaftliches Gerät mit einem Rahmen, an dem in mehreren mit Abstand zueinander und hintereinanderliegenden Querreihen Bodenbearbeitungswerkzeuge an Querbalken beabstandet zueinander und versetzt zueinander angeordnet sind. Die Querbalken sind durchgekröpft ausgebildet. Die Bodenbearbeitungswerkzeuge sind an den Durchkröpfungsscheitelbereichen angeordnet.

Der Erfindung liegt die Aufgabe zu Grunde, eine verbesserte Bodenbearbeitungsmaschine und eine verbesserte Zinkeneinrichtung zur Bodenauflockerung zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft eine (z. B. mehrteilige) Zinkeneinrichtung zur Auflockerung eines Bodens in einer Arbeitsrichtung für eine landwirtschaftliche Bodenbearbeitungsmaschine. Die Zinkeneinrichtung weist einen Befestigungsbereich zum lösbaren Anbringen der Zinkeneinrichtung an einem Rahmen der Bodenbearbeitungsmaschine auf, wobei der Befestigungsbereich einen Kontaktabschnitt zum Anlegen an dem Rahmen aufweist (z. B. direktes Anlegen an einem Rahmenquertäger oder direktes Anlegen an einer Abschersicherung des Rahmens). Die Zinkeneinrichtung weist einen, vorzugsweise hakenförmigen und/oder stabförmigen (z. B. Mehrkantstab, vorzugsweise Vierkantstab), Zinkenstiel auf. Die Zinkeneinrichtung weist ein Schar zum Eingreifen in den Boden, das an einem bodenseitigen Ende des Zinkenstiels angeordnet ist, auf. Eine Länge der Zinkeneinrichtung gemessen bezüglich der Arbeitsrichtung ausgehend von einem hintersten Ende des Kontaktabschnitts bis zu einem hintersten Ende des Zinkenstiels ist größer oder im Wesentlichen gleich einer Höhe der Zinkeneinrichtung gemessen bezüglich einer Hochachse der Zinkeneinrichtung ausgehend von einem untersten Ende des Kontaktabschnitts bis zu einem untersten Ende des Schars.

Vorteilhaft wird somit eine vergleichsweise lange Zinkeneinrichtung geschaffen, die flexibel einsetzbar ist. Dies kann auf vielfältige Art und Weise Vorteile bringen. Die Zinkeneinrichtung kann vergleichsweise dicht zu einer Bodeneinebnungsvorrichtung angeordnet werden, ohne dass hierfür eine spezielle Rahmenkonstruktion mit bspw. durchgekröpften Querbalken, besonders vielen Querbalken oder besonders verstärkten Konstruktionsabschnitten erforderlich ist. Diese dichte Anordnung kann auch dann erzielt werden, wenn im Bereich der Zinkeneinrichtungen und der Bodeneinebnungsvorrichtung Bauraum benötigende Fahrwerksräder zum Abstützen der Bodenbearbeitungsmaschine angeordnet sind. Es wurde herausgefunden, dass sich die dichte Anordnung zu der Bodeneinebnungsvorrichtung aufgrund des beim Auflockern entstehenden Bodenflusses günstig auf die Bodeneinebnung auswirkt. Außerdem kann die lange Zinkeneinrichtung auf einfache Weise den Aufbau einer einbalkigen, zweireihigen Bodenauflockerungsvorrichtung ermöglichen, ohne dass hierfür eine spezielle Konstruktion des Querbalkens notwendig ist. Beispielsweise können die langen Zinkeneinrichtungen einfach in Kombination mit kurzen Zinkeneinrichtungen an demselben Querbalken angebracht werden, z. B. abwechselnd. Die erläuterten Vorteile können insbesondere in den nachfolgend beschriebenen Beispielen erzielt werden.

Vorzugsweise bezieht sich der hierin verwendete Begriff "Zinkeneinrichtung" auf jene Einrichtung mit Zinken die lösbar bzw. zerstörungsfrei abnehmbar vom Rahmen ist. Andererseits bezieht sich der Begriff "Rahmen" vorzugweise auf den Rahmen im engeren Sinne (also bspw. Längsträger und Querträger) und zusätzlich auf Elemente, die integral-einstückig mit dem Rahmen im engeren Sinne verbunden bzw. ausgebildet sind, wie bspw. ein angeschweißtes Blech oder eine angeschweißte Abschersicherung.

Vorzugsweise kann der Befestigungsbereich dazu ausgebildet sein, die Zinkeneinrichtung an einem Träger, vorzugsweise Querträger, des Rahmens der Bodenbearbeitungsmaschinen lösbar anzubringen.

Bevorzugt können der Befestigungsbereich und der Zinkenstiel separat voneinander bzw. als separat vorgesehene Bauteile ausgeführt sein. Alternativ können der Befestigungsbereich und der Zinkenstiel integral-einstückig miteinander ausgebildet bzw. verbunden sein.

Beispielsweise kann der Zinkenstiel und das Schar integral-einstückig miteinander ausgebildet sein. Alternativ kann das Schar lösbar an dem Zinkenstiel befestigt sein, z. B. mittels einer Verschraubung.

In einem Ausführungsbeispiel ist die Länge kleiner oder gleich dem Zweifachen der Höhe.

In einem weiteren Ausführungsbeispiel ist die Länge größer oder im Wesentlichen gleich 700 mm, 800 mm, 900 mm oder 1000 mm. Alternativ oder zusätzlich kann die Länge kleiner 1300 mm, 1200 mm oder 1100 mm sein. Alternativ oder zusätzlich kann die Höhe größer oder im Wesentlichen gleich 600 mm, 700 mm, 800 mm oder 850 mm sein. Alternativ oder zusätzlich kann die Höhe kleiner 1100 mm, 1000 mm oder 900 mm sein.

In einem weiteren Ausführungsbeispiel ist eine Gesamtlänge der Zinkeneinrichtung bezüglich der Arbeitsrichtung größer oder im Wesentlichen gleich einer Gesamthöhe der Zinkeneinrichtung. Alternativ oder zusätzlich kann eine Gesamtlänge des Zinkenstiels bezüglich der Arbeitsrichtung größer oder im Wesentlich gleich einer Gesamthöhe der Zinkenstiels sein.

In einem weiteren Ausführungsbeispiel ist der Zinkenstiel schwenkbar mit dem Befestigungsbereich verbunden (z. B. mittels einer Schwenkachse, eines Drehbolzens oder eines Drehzapfens).

In einem weiteren Ausführungsbeispiel ist der Zinkenstiel mindestens zweiteilig, mit einem vorzugsweise im Wesentlichen geradlinigen Stielteil, das bevorzugt schwenkbar mit dem Befestigungsbereich verbunden ist (z. B. mittels einer Schwenkachse, eines Drehbolzens oder eines Drehzapfens), und einem hakenförmigen Stielteil, das vorzugsweise das bodenseitige Ende aufweist. Damit kann bspw. auf konstruktiv einfache Weise ein vergleichsweise langer Zinkenstiel und damit eine vergleichsweise lange Zinkeneinrichtung ermöglicht werden. Ebenso kann damit eine Gleichteilstrategie ermöglicht werden, wobei das hakenförmige Stielteil sowohl bei der langen Zinkeneinrichtung als auch bei einer kurzen Zinkeneinrichtung eingesetzt werden kann.

Beispielsweise können das im Wesentlichen geradlinige Stielteil und das hakenförmige Stielteil direkt aneinander befestigt sein und/oder mittels des mindestens einen Schwenkarms und/oder mittels des mindestens einen Versteifungselements aneinander befestigt sein.

In einem Ausführungsbeispiel weist die Zinkeneinrichtung eine (z. B. vom Zinkenstiel separate) Vorspanneinrichtung auf, die den Zinkenstiel in einer Richtung zu dem Boden elastisch vorspannt. Vorzugsweise kann ein vorderes Ende des Schars bezüglich der Arbeitsrichtung hinter einem hinteren Ende der Vorspanneinrichtung oder bezüglich der Arbeitsrichtung auf im Wesentlichen gleicher Position bzw. gleicher Höhe wie ein hinteres Ende der Vorspanneinrichtung angeordnet sein. Alternativ oder zusätzlich kann die Länge der Zinkeneinrichtung mindestens 25 %, mindestens 50 % oder mindestens 100 % größer als eine Gesamtlänge der Vorspanneinrichtung bezüglich der Arbeitsrichtung sein.

Vorzugsweise kann die Gesamtlänge des Zinkenstiels mindestens 25%, mindestens 50 % oder mindestens 100 % größer als eine Gesamtlänge der Vorspanneinrichtung bezüglich der Arbeitsrichtung sein.

Vorzugsweise kann die Vorspanneinrichtung oberhalb von dem Zinkenstiel angeordnet sein. Beispielsweise kann die Vorspanneinrichtung einen Fluidzylinder oder eine Feder, vorzugsweise Schraubenfeder, aufweisen. Beispielsweise kann die Vorspanneinrichtung schwenkbar an dem Befestigungsbereich gelagert sein (z. B. mittels eines Drehbolzens oder eines Drehzapfens). Optional kann die Vorspanneinrichtung schwenkbar mit dem Zinkenstiel verbunden sein (z. B. mittels eines Drehbolzens oder eines Drehzapfens und/oder mindestens einen Schwenkarms und/oder mittels eines Gelenks).

Eine Längsachse der Vorspanneinrichtung kann bspw. horizontal, vertikal oder angeschrägt zur Horizontalen und Vertikalen ausgerichtet sein.

In einem weiteren Ausführungsbeispiel weist die Zinkeneinrichtung ferner mindestens einen Schwenkarm auf, der schwenkbar mit dem Befestigungsbereich und/oder schwenkbar mit der Vorspanneinrichtung verbunden ist, und an dem Zinkenstiel befestigt ist, wobei der Zinkenstiel vorzugsweise zwischen zwei Schwenkarmen geklemmt ist. Der Schwenkarm kann die Konstruktion vorzugsweise stabilisieren und eine längere Einsatzzeit ermöglichen.

Beispielsweise kann der mindestens eine Schwenkarm ein Gussteil oder ein Schmiedeteil sein.

Es ist möglich, dass kein Schwenkarm umfasst ist. Der Zinkenstiel kann schwenkbar mit dem Befestigungsbereich verbunden sein, z. B. mit einem Drehzapfen oder einem Drehbolzen.

Es ist auch möglich, dass die Zinkeneinrichtung ferner mindestens ein Versteifungselement, vorzugsweise Versteifungsblech, aufweist, wobei das mindestens eine Versteifungselement den Zinkenstiel (und z. B. den mindestens einen Schwenkarm) versteift, vorzugsweise in einem Abschnitt des Zinkenstiels angrenzend an den Befestigungsbereich und z. B. unterhalb von der Vorspanneinrichtung. Das Versteifungselement kann die Konstruktion vorzugsweise stabilisieren und eine längere Einsatzzeit ermöglichen.

In einer Ausführungsform ist die Länge der Zinkeneinrichtung bezüglich der Arbeitsrichtung verstellbar, vorzugsweise mittels einer Lochplattenverbindung (z. B. zwischen dem mindestens einen Schwenkarm und dem Zinkenstiel). Damit kann die Zinkeneinrichtung für unterschiedliche Einsatzzwecke und Anordnungen angepasst werden, z. B. als kurze Zinkeneinrichtung oder als lange Zinkeneinrichtung.

Es ist möglich, dass die Vorspanneinrichtung in Abhängigkeit von der Länge aus einer Gruppe von unterschiedlichen und/oder unterschiedlichen langen Vorspanneinrichtungen ausgewählt wird.

In einer weiteren Ausführungsform ist der Befestigungsbereich dazu ausgebildet, die Zinkeneinrichtung lösbar an einer Abschersicherung des Rahmens anzubringen. Alternativ kann der Befestigungsbereich bspw. als eine, vorzugsweise mehrteilige, Halterung ausgeführt sein, die zum (z. B. vierseitigen) Klemmen und/oder Schrauben an den Rahmen ausgebildet ist.

Ein weiterer Aspekt der vorliegenden Offenbarung betrifft eine (z. B. gezogene) landwirtschaftliche Bodenbearbeitungsmaschine zur Auflockerung eines Bodens in einer Arbeitsrichtung. Die Bodenbearbeitungsmaschine weist einen Rahmen und eine Bodenauflockerungsvorrichtung mit einer oder mehreren ersten Zinkeneinrichtungen wie hierin für den vorherigen Aspekt offenbart, die an dem Rahmen (z. B. lösbar) angebracht und die vorzugsweise schwenkbar ist oder sind, auf. Vorteilhaft ermöglicht die Bodenbearbeitungsmaschine die Erzielung der gleichen Vorteile, die bereits in Bezug auf den vorherigen Aspekt der Zinkeneinrichtung beschrieben sind.

In einem Ausführungsbeispiel weist die Bodenauflockerungsvorrichtung ferner mehrere zweite Zinkeneinrichtungen auf, die an dem Rahmen (z. B. lösbar) angebracht und die vorzugsweise schwenkbar sind. Die mehreren ersten Zinkeneinrichtungen sind bezüglich der Arbeitsrichtung länger als die mehreren zweiten Zinkeneinrichtungen (z. B. um mindestens 20%, 30 %, 50 %, 80% oder 100 %).

Gemäß einem weiteren Aspekt ist eine landwirtschaftliche Bodenbearbeitungsmaschine zur Auflockerung eines Bodens in einer Arbeitsrichtung offenbart. Die Bodenbearbeitungsmaschine weist einen Rahmen und eine Bodenauflockerungsvorrichtung, die mehrere erste Zinkeneinrichtungen und mehrere zweite Zinkeneinrichtungen aufweist, die an dem Rahmen (z. B. lösbar) angebracht und vorzugsweise schwenkbar sind, auf, wobei die ersten Zinkeneinrichtungen vorzugsweise wie hierin offenbart ausgebildet sind. Die mehreren ersten Zinkeneinrichtungen sind bezüglich der Arbeitsrichtung länger als die mehreren zweiten Zinkeneinrichtungen (z. B. um mindestens 20%, 30 %, 50 %, 80% oder 100 %). Vorteilhaft ermöglicht die Bodenbearbeitungsmaschine die Erzielung der gleichen Vorteile, die bereits in Bezug auf den vorherigen Aspekt der Zinkeneinrichtung beschrieben sind.

Beispielsweise können die zweiten Zinkeneinrichtungen jeweils wie folgt ausgebildet sein. Bevorzugt kann die zweite Zinkeneinrichtung einen Befestigungsbereich zum lösbaren Anbringen der zweiten Zinkeneinrichtung an dem Rahmen der Bodenbearbeitungsmaschine aufweisen, wobei der Befestigungsbereich einen Kontaktabschnitt zum Anlegen an dem Rahmen aufweist (z. B: direktes Anlegen an einem Rahmenquertäger oder direktes Anlegen an einer Abschersicherung des Rahmens). Die zweite Zinkeneinrichtung kann bspw. einen, vorzugsweise hakenförmigen und/oder stabförmigen (z. B. Mehrkantstab, vorzugsweise Vierkantstab), Zinkenstiel aufweisen. Die zweite Zinkeneinrichtung kann bevorzugt ein Schar zum Eingreifen in den Boden, das an einem bodenseitigen Ende des Zinkenstiels angeordnet ist, aufweisen. Vorzugsweise kann eine Länge der zweiten Zinkeneinrichtung gemessen bezüglich der Arbeitsrichtung ausgehend von einem hintersten Ende des Kontaktabschnitts des Befestigungsbereichs der zweiten Zinkeneinrichtung bis zu einem hintersten Ende des Zinkenstiels der zweiten Zinkeneinrichtung größer oder im Wesentlichen gleich einer Höhe der zweiten Zinkeneinrichtung gemessen bezüglich einer Hochachse der zweiten Zinkeneinrichtung ausgehend von einem untersten Ende des Kontaktabschnitts des Befestigungsbereichs der zweiten Zinkeneinrichtung bis zu einem untersten Ende des Schars der zweiten Zinkeneinrichtung sein.

Die längere Ausführung der ersten Zinkeneinrichtungen gegenüber den zweiten Zinkeneinrichtungen kann durch unterschiedliche, miteinander kombinierbare konstruktive Maßnahmen erreicht werden.

In einem Ausführungsbeispiel weisen die mehreren ersten Zinkeneinrichtungen und die mehreren zweiten Zinkeneinrichtungen jeweils einen Zinkenstiel auf, wobei die mehreren Zinkenstiele der mehreren ersten Zinkeneinrichtungen bezüglich der Arbeitsrichtung jeweils länger als die mehreren Zinkenstiele der mehreren zweiten Zinkeneinrichtungen, vorzugsweise um mindestens 20 %, 30 %, 50 %, 80% oder 100 %.

In einem Ausführungsbeispiel weisen die mehreren ersten Zinkeneinrichtungen und die mehreren zweiten Zinkeneinrichtungen jeweils mindestens einen Schwenkarm auf, und die mehreren Schwenkarme der mehreren ersten Zinkeneinrichtungen sind bezüglich der Arbeitsrichtung jeweils länger als die mehreren Schwenkarme der zweiten Zinkeneinrichtungen, vorzugsweise um mindestens 20 %, 30 %, 50 %, 80% oder 100 %.

In einem Ausführungsbeispiel weisen die mehreren ersten Zinkeneinrichtungen und die mehreren zweiten Zinkeneinrichtungen jeweils einen Befestigungsbereich (z. B. ausgeführt als Halterung) auf, der lösbar (z. B. abnehmbar) an dem Rahmen angebracht ist, auf, und die mehreren Befestigungsbereiche der mehreren ersten Zinkeneinrichtungen sind bezüglich der Arbeitsrichtung jeweils länger als die mehreren Befestigungsbereiche der zweiten Zinkeneinrichtungen, vorzugsweise um mindestens 20 %, 30 %, 50 %, 80% oder 100 %.

In einer weiteren Ausführungsform sind die mehreren ersten Zinkeneinrichtungen in mindestens einer Querreihe quer zu der Arbeitsrichtung nebeneinander angeordnet. Alternativ oder zusätzlich können die mehreren ersten Zinkeneinrichtungen bezüglich der Arbeitsrichtung der Bodenbearbeitungsmaschine die letzten Zinkeneinrichtungen der Bodenauflockerungsvorrichtung sein.

Es ist auch möglich, dass die ersten Zinkeneinrichtungen in mehreren Querreihen quer zu Arbeitsrichtung angeordnet sind. Vorzugsweise können die ersten Zinkeneinrichtungen der bezüglich der Arbeitsrichtung letzten Querreihe die letzten Zinkeneinrichtungen der Bodenauflockerungsvorrichtung sein.

In einer Ausführungsvariante weisen die mehreren zweiten Zinkeneinrichtungen und die mehreren ersten Zinkeneinrichtungen mindestens ein Gleichteil auf, vorzugsweise ein, bevorzugt hakenförmiges, Stielteil des jeweiligen Zinkenstiels, ein Schar, einen als Halterung ausgeführten Befestigungsbereich zum lösbaren Anbringen der jeweiligen Zinkeneinrichtung am Rahmen, eine Vorspanneinrichtung und/oder ein Gelenk (z. B. für die Vorspanneinrichtung).

In einer weiteren Ausführungsvariante weist der Rahmen einen (z. B. hintersten) Querträger, vorzugsweise (z. B. Vierkant-) Querbalken oder (z. B. Vierkant-) Querrohr, auf. Die mehreren ersten Zinkeneinrichtungen und die mehreren zweiten Zinkeinrichtungen sind lösbar (z. B. direkt) an dem Querträger angebracht (z. B. angeklemmt, verschraubt und/oder befestigt), vorzugsweise zum Bilden einer einbalkigen, zweireihigen Bodenbearbeitungsmaschine und/oder einbalkigen, zweireihigen Bodenauflockerungsvorrichtung. Vorteilhaft kann somit auf einfache Weise eine zweireihige Bodenauflockerungsvorrichtung geschaffen werden.

Es ist möglich, dass die mehreren ersten Zinkeneinrichtungen und die mehreren zweiten Zinkeneinrichtungen bezüglich einer Arbeitsrichtung der Bodenbearbeitungsmaschine hinter dem Querträger angeordnet sind.

In einer weiteren Ausführungsvariante weist der Rahmen einen ersten Querträger und einen zweiten Querträger auf. Die mehreren ersten Zinkeneinrichtungen sind teilweise lösbar an dem ersten Querträger und teilweise lösbar an dem zweiten Querträger angebracht. Die mehreren zweiten Zinkeneinrichtungen sind teilweise lösbar an dem ersten Querträger und teilweise lösbar an dem zweiten Querträger angebracht. Vorzugsweise wird so eine zweibalkigen, vierreihigen Bodenbearbeitungsmaschine und/oder Bodenauflockerungsmaschine gebildet.

In einer weiteren Ausführungsvariante sind die mehreren zweiten Zinkeneinrichtungen in mehreren, vorzugsweise zwei oder drei, voneinander beabstandeten Querreihen quer zur Arbeitsrichtung angeordnet. Optional sind die mehreren ersten Zinkeneinrichtungen in einer einzigen Querreihe quer zur Arbeitsrichtung angeordnet. Alternativ sind die mehreren ersten Zinkeneinrichtungen in mehreren Querreihen quer zur Arbeitsrichtung angeordnet. Vorteilhaft kann somit auf einfache Weise eine drei- oder vierreihige Bodenauflockerungsvorrichtung geschaffen werden.

Es ist auch möglich, dass in einer der Querreihen der zweiten Zinkeneinrichtungen zusätzlich mindestens eine der ersten Zinkeneinrichtungen angeordnet ist.

In einer weiteren Ausführungsvariante sind die mehreren ersten Zinkeneinrichtungen und die mehreren zweiten Zinkeneinrichtungen die einzigen Zinkeneinrichtungen der Bodenauflockerungsvorrichtung und/oder der Bodenbearbeitungsmaschine. Alternativ oder zusätzlich kann die Bodenauflockerungsvorrichtung die einzige Bodenauflockerungsvorrichtung der Bodenbearbeitungsmaschine sein.

Es ist auch möglich, dass die Bodenauflockerungsvorrichtung weitere Werkzeuge zur Bodenauflockerung aufweist, z. B. Scheiben und/oder Messerwalzen usw., wobei die weiteren Werkzeuge den Zinkeneinrichtungen bezüglich der Arbeitsrichtung vorgelagert oder nachgelagert sein können.

In einem Ausführungsbeispiel weist die Bodenbearbeitungsmaschine ferner eine Bodeneinebnungsvorrichtung zur Einebnung des von der Bodenauflockerungsvorrichtung aufgelockerten Bodens auf, wobei die Bodeneinebnungsvorrichtung bezüglich der Arbeitsrichtung hinter der Bodenauflockerungsvorrichtung angeordnet ist.

In einem weiteren Ausführungsbeispiel sind die mehreren ersten Zinkeneinrichtungen entgegen der Arbeitsrichtung näher zu der Bodeneinebnungsvorrichtung angeordnet als die mehreren zweiten Zinkeneinrichtungen. Damit kann ein besonders günstiger Bodenfluss bei der Auflockerung erreicht werden, der eine verbesserte Einebnung ermöglicht, als dies bspw. bei größeren Abständen zwischen Zinkeneinrichtungen und Bodeneinebnungsvorrichtung möglich wäre.

In einer Ausführungsform ist ein Abstand zwischen den mehreren ersten Zinkeneinrichtungen und der Bodeneinebnungsvorrichtung bezüglich der Arbeitsrichtung kleiner oder im Wesentlichen gleich 2000 mm, 1500 mm, 1000 mm, 500 mm, 400 mm oder 350 mm.

Beispielsweise kann die Bodeneinebnungsvorrichtung mehrere drehbare Scheiben (z. B. Hohlscheiben), mehrere Nivellatoren, mehrere Striegel und/oder mehrere dritte Zinkeneinrichtungen, die zum Einebnen des Bodens angeordnet und ausgebildet sind, aufweisen.

In einem Ausführungsbeispiel weist die Bodenbearbeitungsmaschine ferner eine (z. B. einzige) Bodenrückverfestigungsvorrichtung, vorzugsweise aufweisend eine Packerwalze, zum Rückverfestigen des von der Bodeneinebnungsvorrichtung eingeebneten Bodens, auf. Die Bodenrückverfestigungsvorrichtung kann bezüglich der Arbeitsrichtung hinter der Bodeneinebnungsvorrichtung angeordnet sein.

Es ist möglich, dass eine Arbeitstiefe der ersten und zweiten Zinkeneinrichtungen durch eine Höhenverstellbarkeit der Bodenrückverfestigungsvorrichtung und/oder durch eine Höhenverstellbarkeit mindestens eines Stützrads der Bodenbearbeitungsmaschine verstellbar ist.

In einer weiteren Ausführungsform weist die Bodenbearbeitungsmaschine ferner (mindestens) ein, vorzugweise hinteres und/oder liftbares, Fahrwerksrad auf. Vorzugsweise können das Fahrwerksrad und die mehreren ersten Zinkeneinrichtungen in einer gemeinsamen Querreihe quer zu der Arbeitsrichtung angeordnet sein, oder die mehreren ersten Zinkeneinrichtungen können bezüglich der Arbeitsrichtung hinter dem Fahrwerksrad angeordnet sein. Alternativ oder zusätzlich können die mehreren zweiten Zinkeneinrichtungen bezüglich der Arbeitsrichtung vor dem Fahrwerksrad angeordnet sein, oder das Fahrwerksrad und die mehreren zweiten Zinkeneinrichtungen können in einer gemeinsamen Querreihe quer zu der Arbeitsrichtung angeordnet sein. Vorteilhaft können somit auch besonders schwere und leistungsfähige Bodenbearbeitungsmaschinen, die mindestens ein Fahrwerksrad benötigen, bauraumgünstig aufgebaut werden, ohne dass bspw. eine komplizierte Rahmenstruktur notwendig ist. Dennoch kann eine dichte Anordnung der ersten Zinkeneinrichtung an der Bodeneinebnungsvorrichtung ermöglicht werden.

In einer weiteren Ausführungsform weist das Fahrwerksrad bezüglich der Arbeitsrichtung ein hinteres Ende auf. Die mehreren ersten Zinkeneinrichtungen sind so lang, dass sie entgegen der Arbeitsrichtung im Wesentlichen an das hintere Ende heranreichen oder über das hintere Ende hinaus überstehen. Alternativ oder zusätzlich kann das Fahrwerksrad innerhalb des Rahmens angeordnet sein. Vorteilhaft wird somit eine besonders bauraumgünstige Anordnung geschaffen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Bodenbearbeitungsmaschine gemäß einem Ausführungsbeispiel der vorliegenden Offenbarung;
- Figur 2: eine Seitenansicht der beispielhaften Bodenbearbeitungsmaschine von Figur 1;
- Figur 3: eine Draufsicht auf die beispielhafte Bodenbearbeitungsmaschine von Figur 1;
- Figur 4: eine perspektivische Ansicht einer Bodenbearbeitungsmaschine gemäß einem Ausführungsbeispiel der vorliegenden Offenbarung;
- Figur 5: eine Seitenansicht der beispielhaften Bodenbearbeitungsmaschine von Figur 4;
- Figur 6: eine Draufsicht auf die beispielhafte Bodenbearbeitungsmaschine von Figur 4;
- Figur 7: eine perspektivische Ansicht einer Bodenbearbeitungsmaschine gemäß einem Ausführungsbeispiel der vorliegenden Offenbarung;
- Figur 8: eine Seitenansicht der beispielhaften Bodenbearbeitungsmaschine von Figur 7;
- Figur 9: eine Draufsicht auf die beispielhafte Bodenbearbeitungsmaschine von Figur 7;
- Figur 10: eine perspektivische Ansicht einer (ersten ) Zinkeneinrichtung;
- Figur 11: eine Seitenansicht der beispielhaften Zinkeneinrichtung von Figur 10;
- Figur 12: eine Rückansicht der beispielhaften Zinkeneinrichtung von Figur 10;
- Figur 13: eine Explosionsdarstellung der beispielhaften Zinkeneinrichtung von Figur 10;
- Figur 14: eine perspektivische Ansicht einer (zweiten) Zinkeneinrichtung; und
- Figur 15: eine Seitenansicht der beispielhaften Zinkeneinrichtung von Figur 14.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

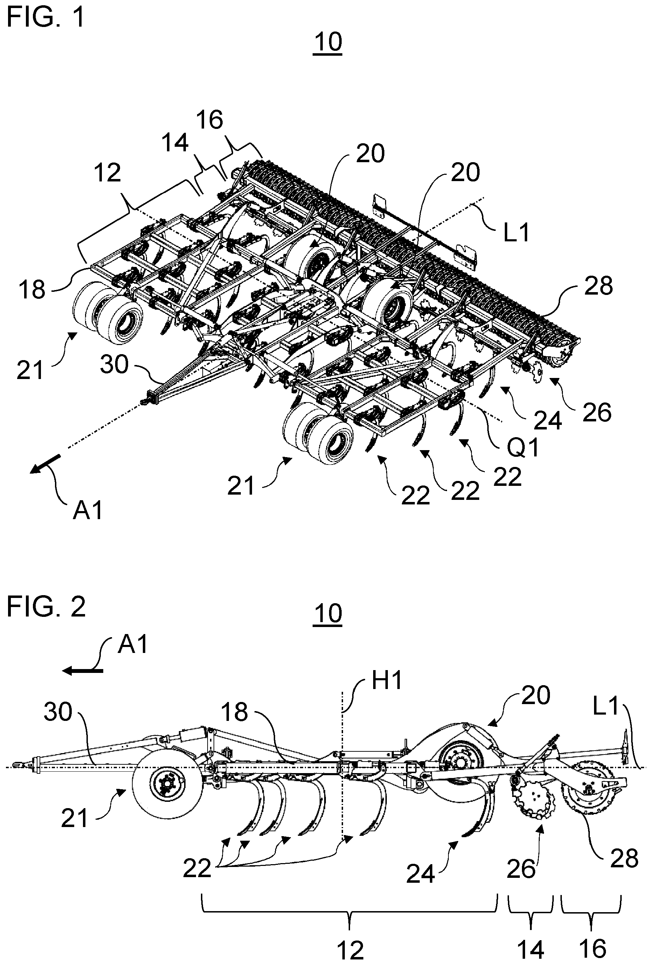

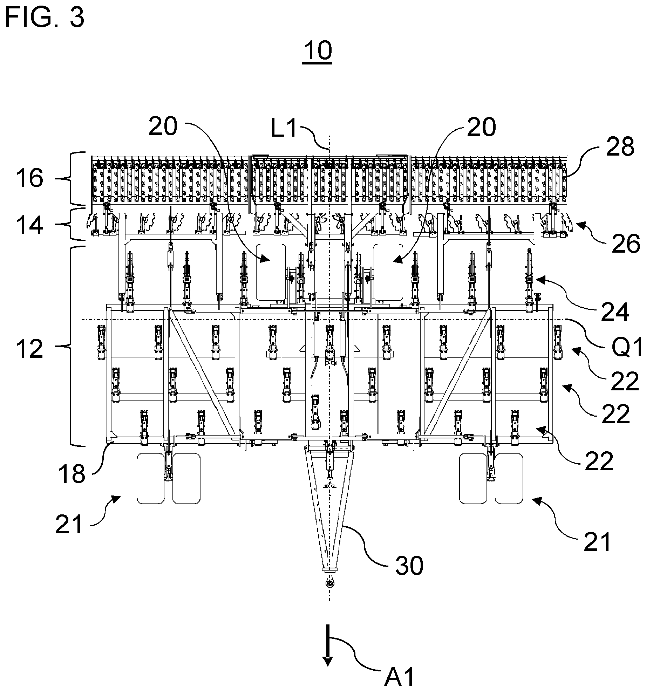

Die Figuren 1 bis 3 zeigen unterschiedliche Ansichten einer landwirtschaftlichen Bodenbearbeitungsmaschine 10 zur Bearbeitung von landwirtschaftlichen Nutzflächen (Ackerboden). Die Bodenbearbeitungsmaschine 10 ist vorzugsweise eine gezogene Bodenbearbeitungsmaschine. Bspw. kann die Bodenbearbeitungsmaschine 10 von einem Zugfahrzeug, wie z. B. einem Traktor, gezogen werden. Die Bodenbearbeitungsmaschine 10 kann in einer Arbeitsrichtung A1 über den Ackerboden bewegt werden. Die Arbeitsrichtung A1 verläuft parallel zu einer Längsachse L1 der Bodenbearbeitungsmaschine 10 und senkrecht zu einer Hochachse H1 der Bodenbearbeitungsmaschine 10.

Die Bodenbearbeitungsmaschine 10 weist eine Bodenauflockerungsvorrichtung 12 auf. Die Bodenbearbeitungsmaschine 10 kann ferner optional eine Bodeneinebnungsvorrichtung 14, eine Bodenrückverdichtungsvorrichtung bzw. Bodenrückverfestigungsvorrichtung 16, einen Rahmen 18, mindestens ein Fahrwerksrad 20 und/oder mindestens ein Stützrad 21 aufweisen.

Die Bodenauflockerungsvorrichtung 12 ist dazu ausgebildet, den Ackerboden aufzulockern. Die Bodenauflockerungsvorrichtung 12 kann bezüglich der Arbeitsrichtung A1, vorzugsweise direkt, vor der Bodeneinebnungsvorrichtung 14 angeordnet sein.

Vorzugsweise kann die Bodenauflockerungsvorrichtung 12 zur nichtwendenden Bodenbearbeitung, zur Lockerung und Krümelung des Bodens und/oder zur Unkrautbekämpfung und Einarbeitung von Ernterückständen in den Boden ausgebildet sein. Die Bodenauflockerungsvorrichtung 12 kann bevorzugt zweireihig, dreireihig oder vierreihig (wie in Figur 1 bis 3 dargestellt) ausgebildet sein.

Die Bodenauflockerungsvorrichtung 12 weist mehrere erste Zinkeneinrichtungen 24 und mehrere zweite Zinkeneinrichtungen 22 auf. Es ist möglich, dass die Bodenauflockerungsvorrichtung 12 mehreren weitere Bodenauflockerungswerkzeuge aufweist, wie z. B. Schieben und/oder Messerwalzen usw. Die mehreren weiteren Bodenauflockerungswerkzeuge können den zweiten Zinkeneinrichtungen 22 und/oder den ersten Zinkeneinrichtungen 24 bezüglich der Arbeitsrichtung A1 bspw. vorgelagert oder nachgelagert sein.

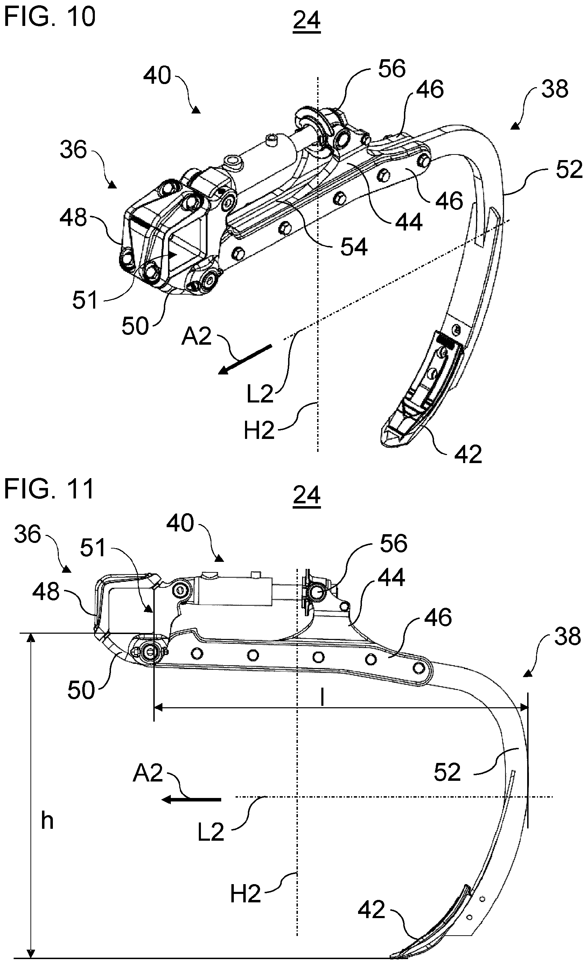

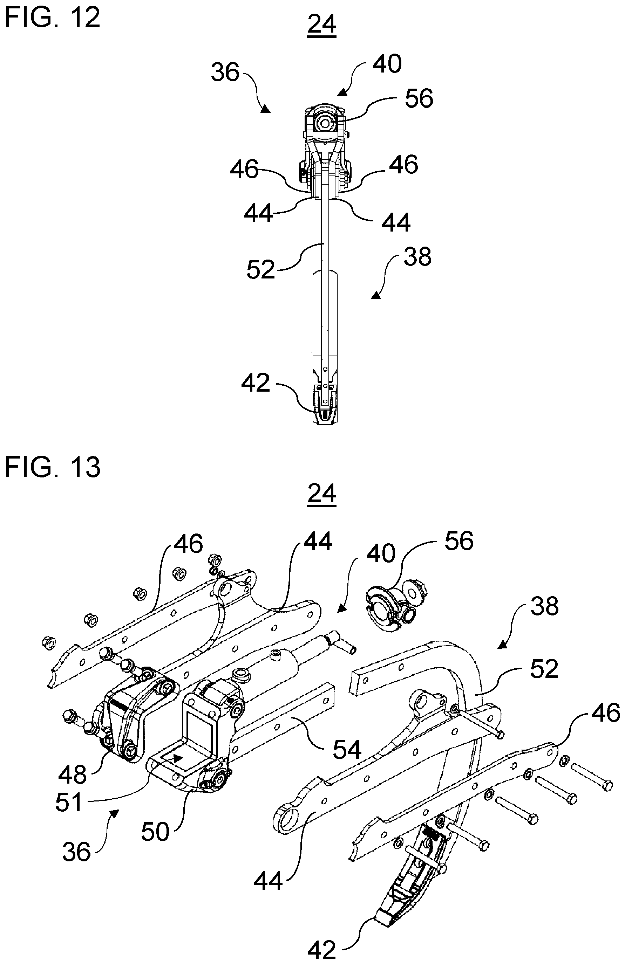

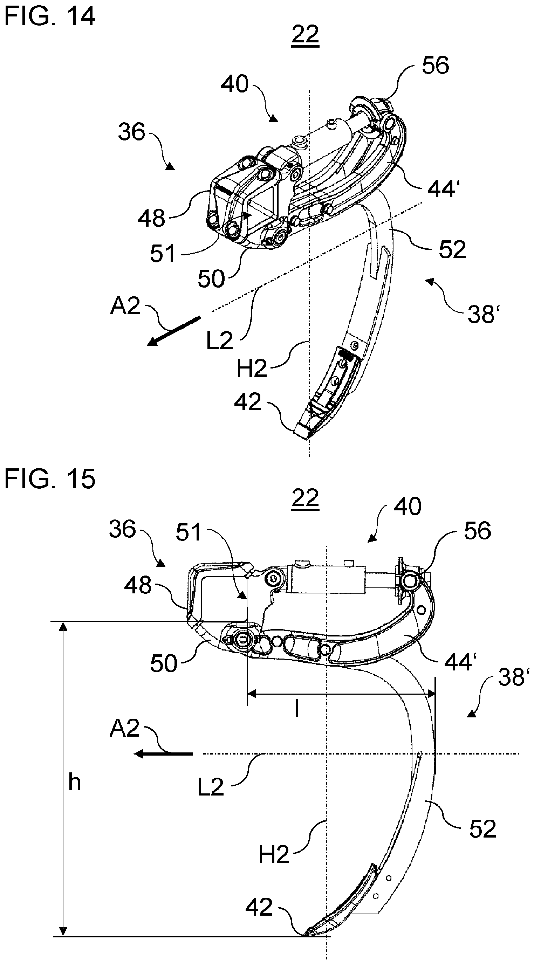

Eine beispielhafte Ausführungsform für die ersten Zinkeneinrichtungen 24 ist unter Bezugnahme auf die Figuren 10 bis 13 beschrieben. Eine beispielhafte Ausführungsform für die zweiten Zinkeneinrichtungen 22 ist unter Bezugnahme auf die Figuren 14 und 15 beschrieben.

Die mehreren Zinkeneinrichtungen 22, 24 sind zum Auflockern des Ackerbodens ausgebildet. Hierzu können die Zinkeneinrichtungen 22, 24 den Ackerboden durchfurchen. Eine Eindringtiefe der Zinkeneinrichtungen 22, 24 in den Ackerboden kann abhängig vom jeweiligen Anwendungsfall sein und bspw. mittels einer (Höhen-) Verstelleinrichtung der Stützräder 21 und/oder der Bodenrückverfestigungsvorrichtung 16 verstellbar sein.

Die mehreren Zinkeneinrichtungen 22, 24 sind bevorzugt dazu ausgebildet bzw. verwendbar, bis zu einer maximalen Arbeitstiefe von 250 mm bis 350 mm in den Boden einzudringen.

Eine Vorspannung der ersten Zinkeneinrichtungen 24 und eine Vorspannung der zweiten Zinkeneinrichtungen 22 können unterschiedlich sein. Die Zinkeneinrichtungen 22, 24 können jeweils schwenkbar gelagerte Zinkenstiele aufweisen.

Die ersten Zinkeneinrichtungen 24 können entgegen der Arbeitsrichtung A1 bzw. bezüglich der Längsachse L1 näher an der Bodeneinebnungsvorrichtung 14 angeordnet sein als die zweiten Zinkeneinrichtungen 22. Vorzugsweise kann ein Abstand bezüglich der Längsachse L1 zwischen den ersten Zinkeneinrichtungen 24 und der Bodeneinebnungsvorrichtung 14 kleiner oder im Wesentlichen gleich 2000 mm, 1000 mm, 500 mm, 400 mm oder 350 mm sein.

Die ersten Zinkeinrichtungen 24 sind bezüglich der Längsachse L1 länger als die zweiten Zinkeneinrichtungen 22. Vorzugsweise sind die ersten Zinkeneinrichtungen 24 um mindestens 20%, 30%, 50 %, 80% oder 100 % länger als die zweiten Zinkeneinrichtungen 22.

Beispielsweise können Zinkenstiele der ersten Zinkeneinrichtungen 24 bezüglich der Längsachse L1 länger als die Zinkenstiele der zweiten Zinkeneinrichtungen 22 sein. Bevorzugt können die Zinkenstiele der ersten Zinkeneinrichtungen 24 um mindestens 20 %, 30 %, 50 %, 80% oder 100 % länger als die Zinkenstiele der zweiten Zinkeneinrichtungen 22 sein.

Es ist allerdings auch möglich, dass zusätzlich oder alternativ andere Elemente der ersten Zinkeneinrichtungen 24 bezüglich der Längsachse L1 länger sind als korrespondierende Elemente der zweiten Zinkeneinrichtungen 22. Beispielsweise kann eine Halterung oder ein Befestigungsbereich zum lösbaren Anbringen (z. B. Anklemmen) der ersten Zinkeneinrichtung 24 am Rahmen 18 bezüglich der Längsachse L1 bzw. der Arbeitsrichtung A1 länger sein als eine Halterung oder ein Befestigungsbereich zum lösbaren Anbringen (z. B. Anklemmen) der zweiten Zinkeneinrichtung 22 am Rahmen, z. B. um mindestens 20 %, 30 %, 50 %, 80% oder 100 %. Beispielsweise kann ein Schwenkarm zum schwenkbaren Lagern eines Zinkenstiels der ersten Zinkeneinrichtung 24 bezüglich der Längsachse L1 bzw. der Arbeitsrichtung A1 länger sein als ein Schwenkarm zum schwenkbaren Lagern eines Zinkenstiels der zweiten Zinkeneinrichtung 22, z. B. um mindestens 20 %, 30 %, 50 %, 80% oder 100 %.

Beispielsweise können die Zinkeneinrichtungen 22, 24 in mehreren (Quer-) Reihen entlang der Längsachse L1 beabstandet voneinander angeordnet sein. Vorzugsweise sind die ersten Zinkeneinrichtungen 24 bezüglich einer Querachse Q1 der Bodenbearbeitungsmaschine 10 beabstandet voneinander angeordnet, vorzugsweise in einer einzigen Querreihe quer zu der Längsachse L1. Die ersten Zinkeneinrichtungen 24 können in mindestens einer Querreihe quer zur Längsachse L1 bzw. zur Arbeitsrichtung A1 beabstandet voneinander angeordnet sein.

Im dargestellten Ausführungsbeispiel weist die Bodenauflockerungsvorrichtung 12 beispielsweise vier (Quer-) Reihen auf. In anderen Worten, die Bodenbearbeitungsmaschine 10 ist vierreihig. Vorzugsweise sind die ersten drei Reihen bezüglich der Arbeitsrichtung A1 durch die zweiten Zinkeneinrichtungen 22 gebildet (die erste Reihe weist mittig aus Bauraumgründen eine unwesentlich nach hinten versetzte zweite Zinkeneinrichtung 22 auf; diese könnte alternativ bspw. als erste Zinkeneinrichtung 24 ausgebildet sein). Die letzte (z. B. vierte) Reihe bezüglich der Arbeitsrichtung A1 kann durch die ersten Zinkeneinrichtungen 24 gebildet sein. Es ist auch möglich, dass die Bodenbearbeitungsmaschine 10 mehr oder weniger Reihen von Zinkeneinrichtungen 22, 24 aufweist. Beispielsweise kann die Bodenauflockerungsvorrichtung 12 auch nur zwei Reihen oder drei Reihen von Zinkeneinrichtungen 22, 24 aufweisen.

Die Bodenauflockerungsvorrichtung 12 kann an dem Rahmen 18 getragen sein. Die Zinkeneinrichtungen 22, 24 können an mehreren Querträgern des Rahmens 18 lösbar angebracht sein. Vorzugsweise sind die Zinkeneinrichtungen 22, 24 an den Querträgern des Rahmens 18 formschlüssig und kraftschlüssig angeklemmt. Die Querträger können bspw. als Rohre oder Balken ausgeführt sein und/oder ein Vierkantprofil aufweisen. Die Querträger können miteinander über mehrere Längsträger des Rahmens 18 verbunden sein.

Die Bodeneinebnungsvorrichtung 14 kann dazu ausgebildet sein, den von der Bodenauflockerungsvorrichtung 12 aufgelockerten Boden einzuebnen. Die Bodeneinebnungsvorrichtung 14 ist bezüglich der Arbeitsrichtung A1 hinter der Bodenauflockerungsvorrichtung 12 angeordnet. Die Bodeneinebnungsvorrichtung 14 kann bezüglich der Arbeitsrichtung A1 vor der Bodenrückverfestigungsvorrichtung 16 angeordnet sein.

Die Bodeneinebnungsvorrichtung 14 kann auf unterschiedliche Arten ausgeführt sein. Beispielsweise kann die Bodeneinebnungsvorrichtung 14 eine Mehrzahl Einebnungselementen aufweisen. Bevorzugt können die Einebnungselemente drehbare (zum Beispiel Hohl-) Scheiben 26 aufweisen. Die Scheiben 26 können jeweils eine Drehachse aufweisen, die angeschrägt zu der Längsachse L1 und angeschrägt zu der Querachse Q1 ist. Die sich drehenden Scheiben 26 können bezüglich der Querachse Q1 nebeneinander in einer Reihe angeordnet sein. Die sich drehenden Scheiben 26 können in einer Querreihe quer zu der Längsachse L1 bzw. der Arbeitsrichtung A1 angeordnet sein. Die sich drehenden Scheiben 26 können die von der Bodenauflockerungsvorrichtung 12 erzeugten Gräben bzw. Furchen einebnen.

Alternativ oder zusätzlich zu den Scheiben 26 kann die Bodeneinebnungsvorrichtung 14 beispielsweise Striegel, mehrere weitere Zinkeneinrichtungen und/oder Nivellatoren als Einebnungselemente aufweisen. Die weiteren Zinkeneinrichtungen wären dementsprechend im Gegensatz zu den Zinkeneinrichtungen 22, 24 dazu ausgebildet und angeordnet, den bereits aufgelockerten Boden wieder einzuebnen. Beispielsweise können die weiteren Zinkeneinrichtungen weniger tief in den Ackerboden eindringen als die Zinkeneinrichtungen 22, 24. Alternativ oder zusätzlich können die weiteren Zinkeneinrichtungen beispielsweise andere Schare als die Zinkeneinrichtungen 22, 24 tragen, wobei diese anderen Schare zum Einebnen ausgebildet sind.

Die Bodeneinebnungsvorrichtung 14 kann an dem Rahmen 18 getragen sein. Beispielsweise können die Scheiben 26, die Striegel oder die weiteren Zinkeneinrichtungen an einem oder mehreren Querträgern des Rahmens 18 angebracht sein.

Die Bodenrückverfestigungsvorrichtung 16 kann dazu ausgebildet sein, den von der Bodenauflockerungsvorrichtung 12 aufgelockerten und von der Bodeneinebnungsvorrichtung 14 eingeebneten Boden wieder zu verfestigen. Die Bodenrückverfestigungsvorrichtung 16 kann bezüglich der Arbeitsrichtung A1 hinter der Bodenauflockerungsvorrichtung 12 und hinter der Bodeneinebnungsvorrichtung 14 angeordnet sein. Beispielsweise kann die Bodenrückverfestigungsvorrichtung 16 eine oder mehrere (gleiche oder unterschiedliche) drehbare Packerwalzen 28 aufweisen. Die Packerwalze 28 kann je nach Anwendungsfall in unterschiedlichen Konfigurationen ausgeführt sein.

Die Bodenrückverfestigungsvorrichtung 16 bzw. die Packerwalze 28 kann an dem Rahmen 18, vorzugsweise einem Querträger des Rahmens 18, getragen sein, bevorzugt höhenverstellbar.

Der Rahmen 18 ist vorzugsweise aus mehreren Längsträgern und Querträgern gebildet. Die Längsträger und/oder die Querträger können jegliches Profil bzw. jegliche Querschnittsform aufweisen, z. B. rund oder mehreckig. Bevorzugt sind die Längsträger und/oder die Querträger als Vierkantrohre oder Vierkantbalken ausgeführt.

Der Rahmen 18 kann die Bodenauflockerungsvorrichtung 12 und ggf. die Bodeneinebnungsvorrichtung 14, die Bodenrückverfestigungsvorrichtung 16, die Fahrwerksräder 20 und die Stützräder 21 tragen. Der Rahmen 18 kann mittels einer Koppelvorrichtung 30 an ein Zugfahrzeug gekoppelt werden.

Die Fahrwerksräder 20 und die Stützräder 21 können den Rahmen 18 auf einem Boden abstützen. Die in den Figuren 1 bis 3 dargestellte Bodenbearbeitungsmaschine 10 hat beispielsweise vier (vordere) Stützräder 21 und zwei (hintere) Fahrwerksräder 20.

In einer Arbeitsposition kann die Bodenbearbeitungsmaschine 10 sich mittels der Bodenrückverfestigungsvorrichtung 16 und der Stützräder 21 am Boden abstützen. Vorzugsweise kann durch eine Höhenverstellung der Bodenrückverfestigungsvorrichtung 16 und/oder der Stützräder 21 eine Verstellung einer Arbeitstiefe der Zinkeneinrichtungen 22, 24 vorgenommen werden.

Die Fahrwerksräder 20 sind vorzugsweise nur am sogenannten Vorgewende und in einer Transportposition in Bodenkontakt. Die Fahrwerksräder 20 können, wenn gewünscht, zumindest teilweise anhebbar bzw. liftbar sein. Die Bodenbearbeitungsmaschine 10 kann die Fahrwerksräder 20 vorzugsweise dann aufweisen, wenn die Bodenbearbeitungsmaschine 10 vergleichsweise groß dimensioniert ist, zum Beispiel mit mehreren Reihen von ersten Zinkeneinrichtungen 24 und/oder zweiten Zinkeneinrichtungen 22.

Die Fahrwerksräder 20 und die Stützräder 21 können in unterschiedlichen Bereichen der Bodenbearbeitungsmaschine 10 angeordnet sein, zum Beispiel vorne, mittig und/oder hinten bezüglich der Längsachse L1. Beispielsweise können die vorderen Stützräder 21 bezüglich der Arbeitsrichtung A1 vor der Bodenauflockerungsvorrichtung 12 angeordnet sein. Bevorzugt sind die Stützräder 21 bezüglich der Arbeitsrichtung A1 vor dem Rahmen 18 angeordnet.

Die optionalen Fahrwerksräder 20 können bezüglich der Arbeitsrichtung A1 vorzugsweise vor der Bodeneinebnungsvorrichtung 14 und gegebenenfalls der Bodenrückverfestigungsvorrichtung 16 angeordnet sein. Die Fahrwerksräder 20 können bezüglich der Arbeitsrichtung A1 hinter den zweiten Zinkeneinrichtungen 22 angeordnet sein. Die Fahrwerksräder 20 können innerhalb des Rahmens 18 angeordnet. Alternativ können die Fahrwerksräder 20 bezüglich der Arbeitsrichtung A1 bspw. hinter dem Rahmen 18 angeordnet sein.

Die Fahrwerksräder 20 können mit den ersten Zinkeneinrichtungen 24 in einer gemeinsamen Querreihe quer zu der Längsachse L1 bzw. der Arbeitsrichtung A1 angeordnet sein. Beispielsweise können die Fahrwerksräder 20 bezüglich der Arbeitsrichtung A1 ein hinteres Ende aufweisen, das im Wesentlichen mit einem hinteren Ende der ersten Zinkeneinrichtungen 24 zusammenfällt. Es ist auch möglich, dass die ersten Zinkeneinrichtungen 24 entgegen der Arbeitsrichtung A1 über das hintere Ende der Fahrwerksräder 20 überstehen.

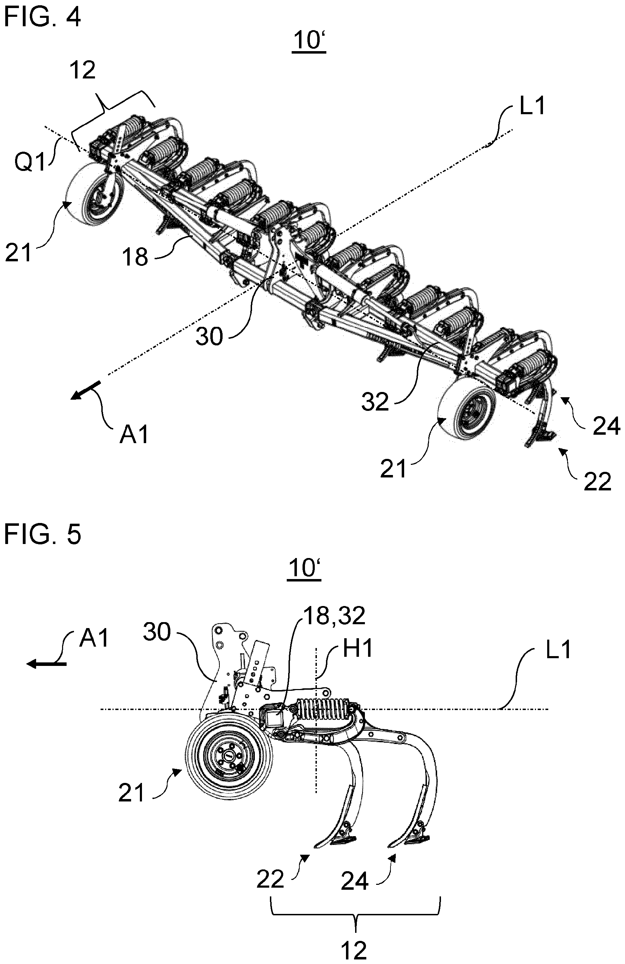

Die Figuren 4 bis 6 zeigen ein weiteres Ausführungsbeispiel für die Bodenbearbeitungsmaschine, die in den Figuren 4 bis 6 mit dem Bezugszeichen 10' gekennzeichnet ist.

Der Rahmen 18 der Bodenbearbeitungsmaschine 10' weist einen Querträger 32 auf. Vorzugsweise kann der Querträger 32 der hinterste Querträger des Rahmens 18 bezüglich der Arbeitsrichtung A1 sein. Die Zinkeneinrichtungen 22 und 24 sind an demselben Querträger 32 getragen bzw. angebracht, vorzugsweise lösbar (z. B. mittels einer Klemmung und/oder Verschraubung). Vorzugsweise können die Zinkeneinrichtungen 22 und 24 abwechselnd nebeneinander bezüglich der Querachse Q1 angeordnet sein. Die zweiten Zinkeneinrichtungen 22 können bezüglich der Arbeitsrichtung A1 hinter dem Querträger 32 angeordnet sein. Die ersten Zinkeneinrichtungen 24 können bezüglich der Arbeitsrichtung A1 hinter dem Querträger 32 angeordnet sein.

Wie in den Figuren 4 bis 6 dargestellt ist, kann die Bodenauflockerungsvorrichtung 12 einbalkig (mit dem Querträger 32) und zweireihig mit den Zinkeneinrichtungen 22 und 24 sein. Damit gelingt es, mit einem einzigen Querträger 32 eine zweireihige Bodenauflockerungsvorrichtung 12 zu schaffen, vorzugsweise einen einbalkigen, zweireihigen Grubber. Eine derartige Anordnung kann bspw. auch im Ausführungsbeispiel der Figuren 1 bis 3 implementiert werden. Es ist möglich, dass die einbalkige, zweireihige Anordnung um einen weiteren Querträger, an dem sowohl erste als auch zweite Zinkeneinrichtungen 22, 24 lösbar angebracht sind, ergänzt wird. So kann auf einfache Weise eine zweibalkige, vierreihige Anordnung geschaffen werden.

Vorzugweise weist die Bodenbearbeitungsmaschine 10' keine Bodeneinebnungsvorrichtung 14 und keine Bodenrückverfestigungsvorrichtung 16 auf.

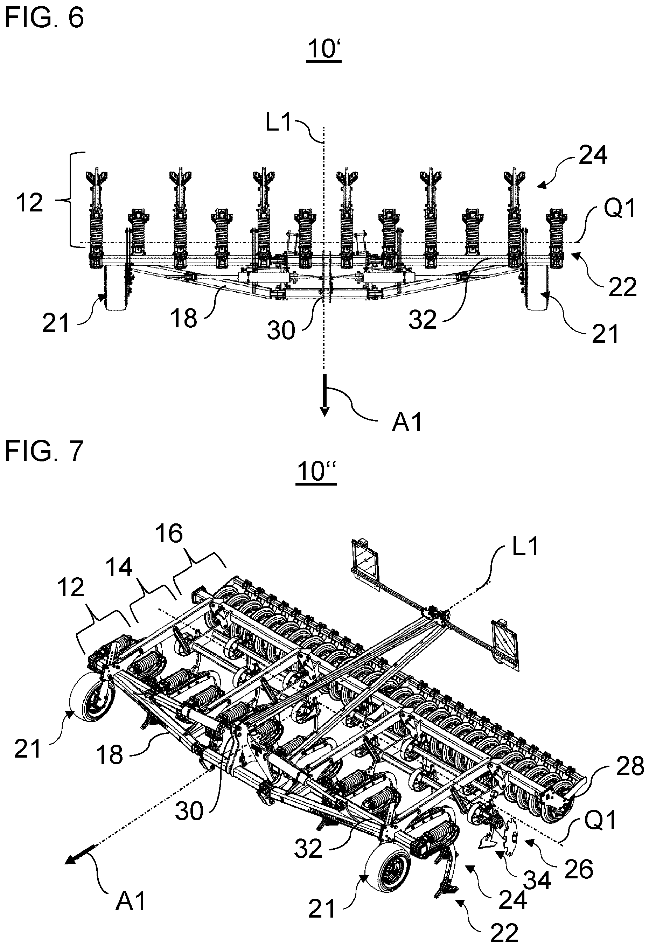

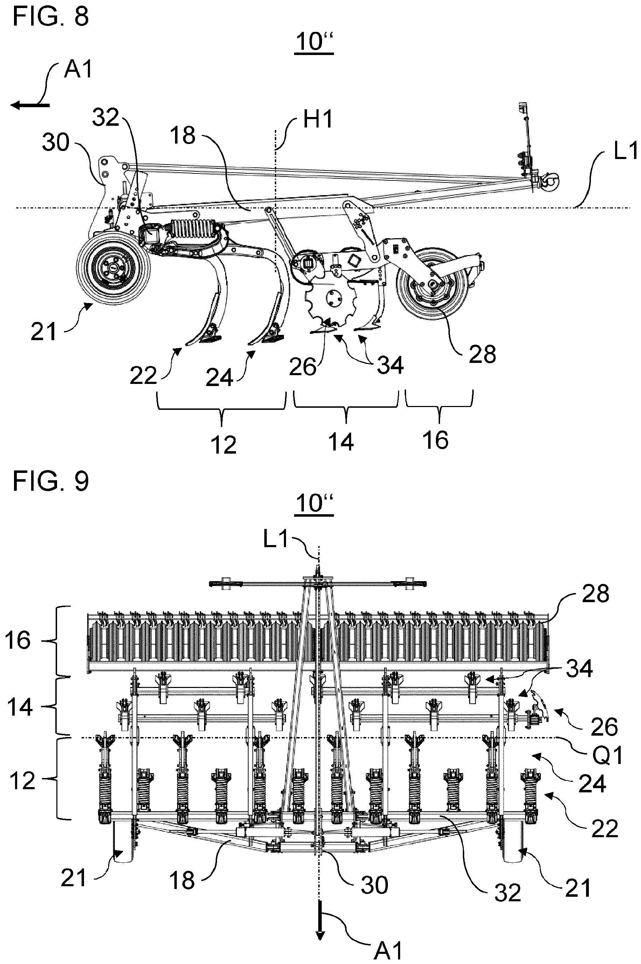

Die Figuren 7 bis 9 zeigen ein weiteres Ausführungsbeispiel für die Bodenbearbeitungsmaschine, die in den Figuren 7 bis 9 mit dem Bezugszeichen 10" gekennzeichnet ist.

Die Bodenauflockerungsvorrichtung 12 kann wie die Bodenauflockerungsvorrichtung 12 der Bodenbearbeitungsmaschine 10' (siehe Figuren 4 bis 6) ausgebildet sein. Da die ersten Zinkeneinrichtungen 24 bezüglich der Längsachse L1 länger sind als die zweiten Zinkeneinrichtungen 22, reichen die ersten Zinkeneinrichtungen 24 bezüglich der Arbeitsrichtung A1 weiter nach hinten. Die ersten Zinkeneinrichtungen 24 sind näher an der Bodeneinebnungsvorrichtung 14 angeordnet als die zweiten Zinkeneinrichtungen 22.

Die Bodeneinebnungsvorrichtung 14 der Bodenbearbeitungsmaschine 10" weist weitere Zinkeneinrichtungen 34 auf. Die weiteren Zinkeneinrichtungen 34 sind bevorzugt in mehreren, vorzugsweise zwei, voneinander bezüglich der Längsachse L1 beabstandeten Querreihen angeordnet. Es ist auch möglich, dass mehr oder weniger Querreihen für die Zinkeneinrichtungen 34 umfasst sind. Die weiteren Zinkeneinrichtungen 34 sind dazu ausgebildet, den von den Zinkeneinrichtungen 22, 24 aufgelockerten Boden einzuebnen. Die Bodeneinebnungsvorrichtung 14 kann zusätzlich mindestens eine drehbare (Hohl-) Scheibe 26 aufweisen, vorzugsweise an mindestens einer Längsaußenseite der Bodeneinebnungsvorrichtung 14. Alternativ oder zusätzlich kann die Bodeneinebnungsvorrichtung 14 beispielsweise Striegel aufweisen.

Die Bodenbearbeitungsmaschine 10" kann entsprechend der Bodenbearbeitungsmaschine 10' (siehe Figuren 4 bis 6) ergänzt um beispielsweise die Bodenebnungsvorrichtung 14 und die Bodenrückverfestigungsvorrichtung 16 ausgebildet sein.

Die Figuren 10 bis 13 zeigen unterschiedliche Ansichten eines bevorzugten Ausführungsbeispiels für die erste Zinkeneinrichtung 24.

Die erste Zinkeneinrichtung 24 kann den Boden in einer Arbeitsrichtung A2 entsprechend der Arbeitsrichtung A1 der Bodenbearbeitungsmaschine 10 auflockern. Die erste Zinkeneinrichtung 24 kann eine Längsachse L2 aufweisen, die parallel zu der Längsachse L1 der Bodenbearbeitungsmaschine 10 ist. Die erste Zinkeneinrichtung 24 kann eine Hochachse H2 aufweisen, die parallel zu der Hochachse H1 der Bodenbearbeitungsmaschine 10 ist.

Die erste Zinkeneinrichtung 24 weist einen Befestigungsbereich 36, einen Zinkenstiel 38, eine Vorspanneinrichtung 40 und ein Schar 42 auf. Die erste Zinkeneinrichtung 24 kann ferner optional mindestens einen Schwenkarm 44 und/oder mindestens ein Versteifungselement 46 aufweisen.

Der Befestigungsbereich 36 ist bevorzugt als eine Halterung ausgeführt, wie dargestellt ist. Die Halterung ist dazu ausgebildet, die erste Zinkeneinrichtung 24 an den Rahmen 18 der Bodenbearbeitungsmaschine 10 (siehe Figuren 1 bis 6) anzubringen. Bevorzugt kann die Halterung die erste Zinkeneinrichtung 24 an einen Querträger des Rahmens 18 klemmen, vorzugsweise form- und kraftschlüssig.

Beispielsweise kann die Halterung zwei Halterungskörper 48, 50 aufweisen. Die Halterungskörper 48, 50 können zwischen sich eine Aufnahme, vorzugsweise ein Durchgangsloch, für einen Träger des Rahmens 18 bilden. Die Aufnahme kann bspw. einen mehreckigen Querschnitt bzw. ein mehreckiges Profil aufweisen, z. B. viereckig wie dargestellt ist. Die Aufnahme kann bspw. durch zwei gegenüberliegende, vertiefte Abschnitte der Halterungskörper 48, 50 gebildet sein. Zum Befestigen der ersten Zinkeneinrichtung 24 an dem Rahmen 18, kann ein Träger des Rahmens 18 in der Aufnahme aufgenommen und die Halterungskörper 48, 50 aneinander befestigt sein, z. B. mittels mehrerer Schraubverbindungen. Der Träger kann kraft- und formschlüssig durch die Halterungskörper 48, 50 in der Aufnahme geklemmt sein.

Alternativ kann der Befestigungsbereich 36 bspw. dazu ausgebildet sein, an einer sogenannten Abschersicherung des Rahmens 18 der Bodenbearbeitungsmaschine 10 lösbar angebracht zu werden (nicht in den Figuren dargestellt). Bspw. kann ein solcher Befestigungsbereich plattenförmig sein und mindestens ein Durchgangsloch aufweisen. Beispielsweise kann ein solcher Befestigungsbereich integral-einstückig mit dem Zinkenstiel 38 ausgebildet sein.

Der Befestigungsbereich 36 weist einen Kontaktabschnitt bzw. eine Kontaktfläche 51 auf, der im am Rahmen 18 montierten Zustand am Rahmen 18 anliegt. Der Kontaktabschnitt 51 kann bspw. durch Innenflächen der Halterung, vorzugsweise der Halterungskörper 48, 50, gebildet sein.

Der Zinkenstiel 38 kann vorzugweise schwenkbar an dem Befestigungsbereich 36 gelagert sein, z. B. mittels eines Drehbolzens oder Drehzapfens. Eine Schwenkachse kann bevorzugt senkrecht zur Hochachse H2 und senkrecht zu der Arbeitsrichtung A2 bzw. der Längsachse L2 sein. Vorzugsweise kann der Zinkenstiel 38 bezüglich der Arbeitsrichtung A2 hinter dem Befestigungsbereich 36 angeordnet sein.

Der Zinkenstiel 38 trägt das Schar 42 an einem bodenseitigen Ende des Zinkenstiels 38, vorzugsweise lösbar. Beispielsweise kann das Schar 42 mittels mehrerer Schraubverbindungen mit dem Zinkenstiel 38 verbunden sein. Alternativ kann das Schar 42 bspw. integral-einstückig mit dem Zinkenstiel 38 ausgebildet sein.

Der Zinkenstiel 38 ist bevorzugt stabförmig. Beispielsweise kann der Zinkenstiel 38 als ein Mehrkantstab, vorzugsweise ein Vierkantstab, ausgeführt sein.

Der Zinkenstiel 38 kann einteilig oder mehrteilig sein. Beispielsweise kann der Zinkenstiel 38 ein erstes Stielteil 52 und ein zweites Stielteil 54 aufweisen.

Das erste Stielteil 52 kann bezüglich der Arbeitsrichtung A2 hinter dem zweiten Stielteil 54 angeordnet sein. Das erste Stielteil 52 kann hakenförmig sein. Das erste Stielteil 52 kann das bodenseitige Ende des Zinkenstiels 38 aufweisen. Das Schar 42 kann an dem ersten Stielteil 52 befestigt sein. Alternativ kann das Schar 42 bspw. integral-einstückig mit dem ersten Stielteil 52 ausgebildet sein.

Das zweite Stielteil 54 kann geradlinig sein. Das zweite Stielteil 54 kann direkt und/oder mittels der Schwenkarme 44 schwenkbar mit dem Befestigungsbereich 36 verbunden sein. Die schwenkbare Lagerung kann parallel zu einer schwenkbaren Lagerung der Vorspanneinrichtung 40 an dem Befestigungsbereich 36 sein. Das zweite Stielteil 54 kann sich einen Drehbolzen oder Drehzapfen mit dem mindestens einen Schwenkarm 44 zur schwenkbaren Lagerung an dem Befestigungsbereich 36 teilen.

Die Stielteile 52, 54 können direkt aneinander und/oder mittels der Schwenkarme 44 aneinander befestigt sein, z. B. mittels Schraubverbindungen. Die Stielteile 52, 54 können jeweils ein oder mehrere Löcher, vorzugsweise Durchgangslöcher, für die Schraubverbindungen aufweisen. Die Löcher können bezüglich der Längsachse L2 bzw. der Arbeitsrichtung A2 voneinander beabstandet sein. Die Stielteile 52, 52 können als Flachprofile ausgeführt sein.

Es ist auch möglich, dass bspw. der zweite Stielteil 54 weggelassen wird oder die Stielteile 52 und 54 integral einstückig miteinander ausgebildet sind.

Die Vorspanneinrichtung 40 ist dazu ausgebildet, den Zinkenstiel 38 und das Schar 42 gegen den Boden elastisch vorzuspannen. Die Vorspannkraft kann durch eine Konstruktion der Vorspanneinrichtung 40 vorgegeben oder einstellbar sein. Vorzugsweise kann die Vorspanneinrichtung 40 ein druckbeaufschlagter Fluidzylinder, z. B. Hydraulikzylinder, sein, wie in den Figuren dargestellt ist. Alternativ oder zusätzlich kann die Vorspanneinrichtung 40 bspw. eine Feder, vorzugsweise eine Schraubenfeder, aufweisen.

Die Vorspanneinrichtung 40 kann oberhalb von dem Zinkenstiel 38, vorzugsweise dem zweiten Stielteil 54, angeordnet sein. Die Vorspanneinrichtung 40 kann bezüglich der Arbeitsrichtung A2 hinter dem Befestigungsbereich 36 angeordnet sein.

Die Vorspanneinrichtung 40 ist bevorzugt schwenkbar mit dem Befestigungsbereich 36 verbunden, z. B. mittels eines Drehzapfens oder eines Drehbolzens. Die Schwenkachse ist vorzugsweise senkrecht zur Hochachse H1, senkrecht zur Arbeitsrichtung A2 bzw. Längsachse L2 und/oder parallel zur schwenkbaren Lagerung der Schwenkarme 44 und/oder des Zinkenstiels 38 an dem Befestigungsbereich 36.

Vorzugsweise ist die Vorspanneinrichtung 40 schwenkbar mit dem Zinkenstiel 38 verbunden, z. B. direkt oder indirekt. Die schwenkbare Verbindung kann bspw. mittels eines Gelenks 56 und der Schwenkarme 44 bereitgestellt sein. Das Gelenk 56 kann bspw. schwenkbar mit sich entlang der Hochachse H2 nach oben erstreckenden Abschnitten bzw. Vorsprüngen der Schwenkarme 44 verbunden sein. Das Gelenk 56 kann bspw. einen Drehbolzen bzw. Drehzapfen und/oder einen Kugelgelenkabschnitt aufweisen.

Die schwenkbare Verbindung der Vorspanneinrichtung 40 mit der Halterung 38 kann bezüglich der Arbeitsrichtung A2 vorzugsweise vor der schwenkbaren Verbindung der Vorspanneinrichtung 40 mit den Schwenkarmen 44 bzw. dem Zinkenstiel 38 angeordnet sein.

Das Schar 42 ist zum Eingreifen in und Auflockern des Bodens ausgebildet. Das Schar 42 kann lösbar, z. B. mittels Schraubverbindungen, an dem Zinkenstiel 38 befestigt sein oder bspw. integral einstückig mit dem Zinkenstiel 38 ausgebildet sein. Das Schar 42 kann je nach Anwendungsfall konstruktiv anders ausgeführt sein, z. B. in Abhängigkeit von der gewünschten Eindringtiefe und der Bodenbeschaffenheit. Das Schar 42 kann weitere als die dargestellten Teile aufweisen, z. B. Teile links und rechts am Zinkenstiel 38 in einer Vorderansicht des Zinkenstiels 38 (nicht dargestellt).

Die Schwenkarme 44 sind dazu ausgebildet, den Zinkenstiel 38 schwenkbar mit dem Befestigungsbereich 36 zu verbinden, z. B. mittels eines Drehbolzens oder eines Drehzapfens und/oder parallel zu einer schwenkbaren Lagerung der Vorspanneinrichtung 40 an dem Befestigungsbereich 36. Die Schwenkarme 44 sind vorzugsweise mittels des Gelenks 56 schwenkbar mit der Vorspanneinrichtung 40 verbunden.

Die Schwenkarme 44 können sich parallel zu dem zweiten Stielteil 54 erstrecken. Die Schwenkarme 44 sind bevorzugt länglich ausgeführt. Die Schwenkarme 44 können als Flachprofile ausgeführt sein.

Die Schwenkarme 44 können direkt unter der Vorspanneinrichtung 40 angeordnet sein. Bezüglich der Arbeitsrichtung A1 können die Schwenkarme 44 hinter dem Befestigungsbereich 36 angeordnet sein. Die Schwenkarme 44 können an dem Zinkenstiel 38 anliegen.

Die Schwenkarme 44 können mehrere Löcher, vorzugsweise Durchgangslöcher, für die Schraubverbindungen mit dem Zinkenstiel 38, vorzugsweise den Stielteilen 52, 54, aufweisen. Die Löcher können bezüglich der Längsachse L2 bzw. der Arbeitsrichtung A2 voneinander beabstandet sein. Der Zinkenstiel 38 kann zwischen den Schwenkarmen 44 geklemmt sein.

Die dargestellten Schwenkarme 44 sind paarweise vorgesehen. Es ist allerdings auch möglich, dass bspw. nur ein Schwenkarm 44 umfasst ist. Alternativ kann bspw. auch kein Schwenkarm umfasst sein und der Zinkenstiel 38 nur direkt schwenkbar an dem Befestigungsbereich 36 gelagert sein.

Es ist möglich, dass eine Gesamtlänge des Zinkenstiels 38 und/oder der ersten Zinkeneinrichtung 24 bezüglich der Arbeitsrichtung A2 bzw. der Längsachse L2 verstellbar ist. Beispielsweise kann eine gewünschte Gesamtlänge durch Auswahl der miteinander fluchtenden Löcher des Zinkenstiels 38 und der Schwenkarme 44 erreicht werden. Diese Technik kann eine diskrete Verstellung der Gesamtlänge ermöglichen und eine Lochplattenverbindung basieren.

Die Versteifungselemente 46 sind dazu ausgebildet, die Schwenkarme 44 und den Zinkenstiel 38 zu versteifen. Die Versteifungselemente 46 können an den Schwenkarmen 44 anliegen. Die Versteifungselemente 46 können direkt unterhalb von der Vorspannungseinrichtung 44 angeordnet sein. Bevorzugt wirkt die Versteifung insbesondere in einem Abschnitt des Zinkenstiels 38 und der Schwenkarme 44 direkt unterhalb der Vorspanneinrichtung 40 und angrenzend an den Befestigungsbereich 36.

Die Versteifungselemente 46 sind vorzugsweise als längliche Versteifungsbleche ausgeführt. Die Versteifungselemente 46 können als Flachprofile ausgeführt sein. Die Versteifungselemente 46 können mehrere Löcher, vorzugsweise Durchgangslöcher, für die Schraubverbindungen mit dem Zinkenstiel 38, vorzugsweise den Stielteilen 52, 54, und den Schwenkarmen 44 aufweisen. Die Löcher können bezüglich der Längsachse L2 bzw. der Arbeitsrichtung A2 voneinander beabstandet sein. Der Zinkenstiel 38 und die Schwenkarme 44 können zwischen den Versteifungselementen 46 geklemmt sein.

Vorzugsweise fluchten die Löcher in den Versteifungselementen 46, den Schwenkarmen 44 und dem Zinkenstiel 38 (den Stielteilen 52, 54) miteinander.

Die dargestellten Versteifungselemente 46 sind paarweise vorgesehen. Es ist allerdings auch möglich, dass bspw. nur ein Versteifungselement 46 umfasst ist. Alternativ kann bspw. auch kein Versteifungselement umfasst sein.

Die erste Zinkeneinrichtung 24 ist bezüglich der Längsachse L2 vergleichsweise lang bzw. länger als herkömmlich ausgebildet.

Die vergleichsweise große Gesamtlänge der ersten Zinkeneinrichtung 24 kann durch unterschiedliche, miteinander kombinierbare Maßnahmen erreicht werden, z. B. durch eine verlängerte Ausbildung des Zinkenstiels 38, eine verlängerte Ausbildung des mindestens einen Schwenkarms 44 und/oder eine verlängerte Ausbildung des Befestigungsbereichs 36 bezüglich der Arbeitsrichtung A2 bzw. der Längsachse L2.

Die große Gesamtlänge der ersten Zinkeneinrichtung 24 kann durch unterschiedliche geometrische Verhältnisse der ersten Zinkeneinrichtung 24 charakterisiert sein, die einzeln oder in jeglicher Kombination miteinander auftreten können.

Beispielsweise kann eine Gesamtlänge der ersten Zinkeneinrichtung 24 bezüglich der Arbeitsrichtung A2 bzw. der Längsachse L2 mindestens so groß wie eine Gesamthöhe der ersten Zinkeneinrichtung 24 bezüglich der Hochachse H2 sein.

Beispielsweise kann die Gesamtlänge des Zinkenstiels 38 bezüglich der Arbeitsrichtung A2 größer oder im Wesentlichen gleich der Gesamthöhe des Zinkenstiels 38 sein. Beispielsweise kann das Schar 42 und/oder das bodenseitige Ende des Zinkenstiels 38 bezüglich der Arbeitsrichtung A2 bzw. der Längsachse L2 hinter dem Befestigungsbereich 36 und hinter der Vorspanneinrichtung 40 angeordnet sein.

Beispielsweise kann eine Länge I der ersten Zinkeneinrichtung 24 bezüglich der Arbeitsrichtung A2 ausgehend von einem hintersten Ende des Kontaktabschnitts 51 bis zu einem hintersten Ende des Zinkenstiels 38 gemessen sein. Eine Höhe h der ersten Zinkeneinrichtung 24 kann bezüglich einer Hochachse H2 der ersten Zinkeneinrichtung 24 ausgehend von einem untersten Ende des Kontaktabschnitts 51 bis zu einem untersten Ende des Schars 42 gemessen sein. Die Länge I kann größer oder im Wesentlichen gleich der Höhe H sein (siehe Figur 11). Vorzugsweise kann die Länge I kleiner oder gleich dem Zweifachen der Höhe h sein.

Beispielsweise kann die Länge I der ersten Zinkeneinrichtung 24 größer oder im Wesentlichen gleich 700 mm, 800 mm, 900 mm oder 1000 mm sein, und/oder die Länge I der ersten Zinkeneinrichtung 24 kann kleiner 1300 mm, 1200 mm oder 1100 mm sein. Die Höhe h der ersten Zinkeneinrichtung 24 kann größer oder im Wesentlichen gleich 600 mm, 700 mm, 800 mm oder 850 mm sein, und/oder die Höhe h der ersten Zinkeneinrichtung 24 kann kleiner 1100 mm, 1000 mm oder 900 mm sein.

Beispielsweise kann die Gesamtlänge des Zinkenstiels 38 mindestens 25%, mindestens 50 %, vorzugsweise mindestens 100 %, größer als eine Gesamtlänge der Vorspanneinrichtung 40 bezüglich der Arbeitsrichtung A2 bzw. der Längsachse L2 sein.

Die Figuren 14 und 15 zeigen unterschiedliche Ansichten eines bevorzugten Ausführungsbeispiels für die zweite Zinkeneinrichtung 22.

Die zweite Zinkeneinrichtung 22 ist ähnlich zu der ersten Zinkeneinrichtung 24 ausgebildet. Allerdings ist die zweite Zinkeneinrichtung 22 bezüglich der Längsachse L2 bzw. der Arbeitsrichtung A2 deutlich kürzer als die erste Zinkeneinrichtung 24.

Beispielsweise kann eine Gesamtlänge der zweiten Zinkeneinrichtung 22 bezüglich der Arbeitsrichtung A2 bzw. der Längsachse L2 kleiner sein als eine Gesamthöhe der zweiten Zinkeneinrichtung 22 bezüglich der Hochachse H2. Beispielsweise kann die Gesamtlänge des Zinkenstiels 38' bezüglich der Arbeitsrichtung A2 bzw. der Längsachse L2 kleiner als eine Gesamthöhe des Zinkenstiels 38' bezüglich der Hochachse sein. Beispielsweise kann das Schar 42 und/oder das bodenseitige Ende des Zinkenstiels 38' bezüglich der Arbeitsrichtung bzw. der Längsachse L2 hinter dem Befestigungsbereich 36 und/oder direkt unterhalb der Vorspanneinrichtung 40 angeordnet sein.

Wie der Figur 15 zu entnehmen ist, kann eine Länge I der zweiten Zinkeneinrichtung 22 gemessen bezüglich der Arbeitsrichtung A2 ausgehend von einem hintersten Ende des Kontaktabschnitts 51 bis zu einem hintersten Ende des Zinkenstiels 38 kleiner als eine Höhe h der zweiten Zinkeneinrichtung 22 gemessen bezüglich einer Hochachse H2 der zweiten Zinkeneinrichtung 22 ausgehend von einem untersten Ende des Kontaktabschnitts 51 bis zu einem untersten Ende des Schars 42 sein.

Beispielsweise kann die Länge I der zweiten Zinkeneinrichtung 22 größer oder im Wesentlichen gleich 200 mm, 300 mm, 400 mm oder 500 mm sein, und/oder die Länge I der zweiten Zinkeneinrichtung 22 kann kleiner 800 mm, 700 mm oder 600 mm sein. Die Höhe h der zweiten Zinkeneinrichtung 22 kann größer oder im Wesentlichen gleich 600 mm, 700 mm, 800 mm oder 850 mm sein, und/oder die Höhe h der zweiten Zinkeneinrichtung 22 kann kleiner 1100 mm, 1000 mm oder 900 mm sein.

Beispielsweise kann die Gesamtlänge des Zinkenstiels 38' im Wesentlichen einer Gesamtlänge der Vorspanneinrichtung 40 bezüglich der Arbeitsrichtung A2 bzw. der Längsachse L2 entsprechen oder unwesentlich größer sein oder sogar kleiner sein.

Wie bspw. ein Vergleich der Figuren 11 und 15 ergibt, kann ein Zinkenstiel 38' der zweiten Zinkeneinrichtung 22 bezüglich der Längsachse L2 bzw. der Arbeitsrichtung A2 kürzer als der Zinkenstiel 38 der ersten Zinkeneinrichtung 24 sein. Beispielsweise kann der Zinkenstiel 38' nur durch das Stielteil 52 gebildet sein. Der Zinkenstiel 38 kann durch die Stielteile 52, 54 gebildet sein. Vorzugsweise kann der Zinkenstiel 38 der ersten Zinkeneinrichtung 24 um mindestens 20%, 30 %, 50 %, 80% oder 100 % länger sein als der Zinkenstiel 38' der zweiten Zinkeneinrichtung 22.

Wie bspw. ein Vergleich der Figuren 11 und 15 ergibt, kann der mindestens eine Schwenkarm 44' der zweiten Zinkeneinrichtung 22 bezüglich der Längsachse L2 bzw. der Arbeitsrichtung A2 kürzer als der mindestens eine Schwenkarm 44 der ersten Zinkeneinrichtung 24 sein. Vorzugsweise kann der Schwenkarm 44 der ersten Zinkeneinrichtung 24 um mindestens 20%, 30 %, 50 %, 80% oder 100 % länger sein als der Schwenkarm 44' der zweiten Zinkeneinrichtung 22.

Nicht explizit in den Figuren dargestellt, aber ebenfalls möglich, können die Befestigungsbereiche 36 der Zinkeneinrichtungen 22, 24 bezüglich der Arbeitsrichtung A2 bzw. der Längsachse L2 unterschiedlich lang sein. Vorzugsweise kann der Befestigungsbereich 36 der ersten Zinkeneinrichtung 24 um mindestens 20 %, 30 %, 50 %, 80% oder 100 % länger sein als der Befestigungsbereich 36 der zweiten Zinkeneinrichtung 22 (nicht in den Figuren dargestellt).

Vorzugsweise teilen sich die Zinkeneinrichtungen 22 und 24 mehrere Gleichteile. Beispielsweise können die Stielteile 52, die Vorspanneinrichtungen 40, der als Halterung ausgeführte Befestigungsbereich 36, die Halterungskörper 48, 50 und/oder die Gelenke 56 als Gleichteile ausgeführt sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale der unabhängigen Ansprüche jeweils unabhängig voneinander offenbart. Zusätzlich sind auch die Merkmale der Unteransprüche unabhängig von sämtlichen Merkmalen des jeweiligen unabhängigen Anspruchs offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Bodenbearbeitungsmaschine
- 12: Bodenauflockerungsvorrichtung
- 14: Bodeneinebnungsvorrichtung
- 16: Bodenrückverfestigungsvorrichtung
- 18: Rahmen
- 20: Fahrwerksrad
- 21: Stützrad
- 22: zweite Zinkeneinrichtung
- 24: erste Zinkeneinrichtung
- 26: Scheibe (Scheiben-Zustreicher)
- 28: Packerwalze
- 30: Koppelvorrichtung
- 32: Querträger
- 34: Zinkeneinrichtung
- 36: Befestigungsbereich
- 38: Zinkenstiel
- 40: Vorspanneinrichtung
- 42: Schar
- 44: Schwenkarm
- 46: Versteifungselement
- 48: Halterungskörper
- 50: Halterungskörper
- 51: Kontaktabschnitt
- 52: Stielteil
- 54: Stielteil
- 56: Gelenk
- L1: Längsachse
- L2: Längsachse
- Q1: Querachse
- Q2: Querachse
- H1: Hochachse
- H2: Hochachse
- I: Länge
- h: Höhe

## Patentansprüche

1. Zinkeneinrichtung (24) zur Auflockerung eines Bodens in einer Arbeitsrichtung (A2) für eine landwirtschaftliche Bodenbearbeitungsmaschine (10), aufweisend:
einen Befestigungsbereich (36) zum lösbaren Anbringen der Zinkeneinrichtung (24) an einem Rahmen (18) der Bodenbearbeitungsmaschine (10), wobei der Befestigungsbereich (36) einen Kontaktabschnitt (51) zum Anlegen an dem Rahmen (18) aufweist;
einen, vorzugsweise hakenförmigen und/oder stabförmigen, Zinkenstiel (38);
ein Schar (42) zum Eingreifen in den Boden, das an einem bodenseitigen Ende des Zinkenstiels (38) angeordnet ist,
wobei:
eine Länge (I) der Zinkeneinrichtung (24) gemessen bezüglich der Arbeitsrichtung (A2) ausgehend von einem hintersten Ende des Kontaktabschnitts (51) bis zu einem hintersten Ende des Zinkenstiels (38) größer oder im Wesentlichen gleich einer Höhe (h) der Zinkeneinrichtung (24) gemessen bezüglich einer Hochachse (H2) der Zinkeneinrichtung (24) ausgehend von einem untersten Ende des Kontaktabschnitts (51) bis zu einem untersten Ende des Schars (42) ist.

2. Zinkeneinrichtung (24) nach Anspruch 1, wobei:
die Länge (I) kleiner oder gleich dem Zweifachen der Höhe (h) ist.

3. Zinkeneinrichtung (24) nach Anspruch 1 oder Anspruch 2, wobei:
die Länge (I) größer oder im Wesentlichen gleich 700 mm, 800 mm, 900 mm oder 1000 mm ist; und/oder
die Länge (I) kleiner 1300 mm, 1200 mm oder 1100 mm ist; und/oder
die Höhe (h) größer oder im Wesentlichen gleich 600 mm, 700 mm, 800 mm oder 850 mm ist; und/oder
die Höhe (h) kleiner 1100 mm, 1000 mm oder 900 mm ist.

4. Zinkeneinrichtung (24) nach einem der vorherigen Ansprüche, wobei:
eine Gesamtlänge der Zinkeneinrichtung (24) bezüglich der Arbeitsrichtung (A2) größer oder im Wesentlichen gleich einer Gesamthöhe der Zinkeneinrichtung (24) ist; und/oder
eine Gesamtlänge des Zinkenstiels (38) bezüglich der Arbeitsrichtung (A2) größer oder im Wesentlich gleich einer Gesamthöhe der Zinkenstiels (24) ist.

5. Zinkeneinrichtung (24) nach einem der vorherigen Ansprüche, wobei:
der Zinkenstiel (38) schwenkbar mit dem Befestigungsbereich (36) verbunden ist, und/oder
der Zinkenstiel (38) mindestens zweiteilig ist, mit einem vorzugsweise im Wesentlichen geradlinigen Stielteil (54), das bevorzugt schwenkbar mit dem Befestigungsbereich (36) verbunden ist, und einem hakenförmigen Stielteil (52), das vorzugsweise das bodenseitige Ende aufweist.

6. Zinkeneinrichtung (24) nach einem der vorherigen Ansprüche, ferner aufweisend:
eine Vorspanneinrichtung (40), die den Zinkenstiel (38) in einer Richtung zu dem Boden elastisch vorspannt,
wobei ein vorderes Ende des Schars (42) bezüglich der Arbeitsrichtung (A2) hinter einem hinteren Ende der Vorspanneinrichtung (40) oder bezüglich der Arbeitsrichtung (A2) auf im Wesentlichen gleicher Position wie ein hinteres Ende der Vorspanneinrichtung (40) angeordnet ist; und/oder
wobei die Länge (I) der Zinkeneinrichtung (24) mindestens 25 %, mindestens 50 % oder mindestens 100 % größer als eine Gesamtlänge der Vorspanneinrichtung (40) bezüglich der Arbeitsrichtung (A2) ist.

7. Zinkeneinrichtung (24) nach Anspruch 6, ferner aufweisend:
mindestens einen Schwenkarm (44), der schwenkbar mit dem Befestigungsbereich (36) und schwenkbar mit der Vorspanneinrichtung (40) verbunden und an dem Zinkenstiel (38) befestigt ist, wobei der Zinkenstiel (38) vorzugsweise zwischen zwei Schwenkarmen (44) geklemmt ist.

8. Zinkeneinrichtung (24) nach einem der vorherigen Ansprüche, wobei:
die Länge (I) der Zinkeneinrichtung (24) bezüglich der Arbeitsrichtung (A2) verstellbar ist, vorzugsweise mittels einer Lochplattenverbindung.

9. Zinkeneinrichtung (24) nach einem der vorherigen Ansprüche, wobei:
der Befestigungsbereich (36) dazu ausgebildet ist, die Zinkeneinrichtung (36) lösbar an einer Abschersicherung des Rahmens (18) anzubringen; oder
der Befestigungsbereich (36) als eine, vorzugsweise mehrteilige, Halterung ausgeführt ist, die zum Klemmen und/oder Schrauben an den Rahmen (18) ausgebildet ist.

10. Landwirtschaftliche Bodenbearbeitungsmaschine (10) zur Auflockerung eines Bodens in einer Arbeitsrichtung (A1), wobei die Bodenbearbeitungsmaschine (10) aufweist:
einen Rahmen (18);
eine Bodenauflockerungsvorrichtung (12) mit einer oder mehreren ersten Zinkeneinrichtungen (24) nach einem der vorherigen Ansprüche, die an dem Rahmen (18) angebracht und die vorzugsweise schwenkbar ist oder sind.

11. Landwirtschaftliche Bodenbearbeitungsmaschine (10) nach Anspruch 10, wobei:
die Bodenauflockerungsvorrichtung (12) ferner mehrere zweite Zinkeneinrichtungen (22) aufweist, die an dem Rahmen (18) angebracht und die vorzugsweise schwenkbar sind, und
die mehreren ersten Zinkeneinrichtungen (24) bezüglich der Arbeitsrichtung (A1) länger sind als die mehreren zweiten Zinkeneinrichtungen (22).

12. Landwirtschaftliche Bodenbearbeitungsmaschine (10) zur Auflockerung eines Bodens in einer Arbeitsrichtung (A1), wobei die Bodenbearbeitungsmaschine (10) aufweist:
einen Rahmen (18);
eine Bodenauflockerungsvorrichtung (12), die mehrere erste Zinkeneinrichtungen (24) und mehrere zweite Zinkeneinrichtungen (22) aufweist, die an dem Rahmen (18) angebracht und vorzugsweise schwenkbar sind, wobei die mehreren ersten Zinkeneinrichtungen (24) vorzugsweise nach einem der Ansprüche 1 bis 9 ausgebildet sind; und
wobei die mehreren ersten Zinkeneinrichtungen (24) bezüglich der Arbeitsrichtung (A1) länger sind als die mehreren zweiten Zinkeneinrichtungen (22).

13. Landwirtschaftliche Bodenbearbeitungsmaschine (10) nach Anspruch 11 oder Anspruch 12, wobei:
die mehreren ersten Zinkeneinrichtungen (24) und die mehreren zweiten Zinkeneinrichtungen (22) jeweils einen Zinkenstiel (38, 38') aufweisen, und die mehreren Zinkenstiele (38) der mehreren ersten Zinkeneinrichtungen (24) bezüglich der Arbeitsrichtung (A1) jeweils länger als die mehreren Zinkenstiele (38') der mehreren zweiten Zinkeneinrichtungen (22) sind, vorzugsweise um mindestens 20 %, 30 %, 50 %, 80% oder 100 %; und/oder
die mehreren ersten Zinkeneinrichtungen (24) und die mehreren zweiten Zinkeneinrichtungen (22) jeweils mindestens einen Schwenkarm (44, 44') aufweisen, und die mehreren Schwenkarme (44) der mehreren ersten Zinkeneinrichtungen (24) bezüglich der Arbeitsrichtung (A1) jeweils länger als die mehreren Schwenkarme (44') der zweiten Zinkeneinrichtungen (22) sind, vorzugsweise um mindestens 20 %, 30 %, 50 %, 80% oder 100 %; und/oder
die mehreren ersten Zinkeneinrichtungen (24) und die mehreren zweiten Zinkeneinrichtungen (22) jeweils einen Befestigungsbereich (36), der lösbar an dem Rahmen (18) angebracht ist, aufweisen, und die mehreren Befestigungsbereiche (36) der mehreren ersten Zinkeneinrichtungen (24) bezüglich der Arbeitsrichtung (A1) jeweils länger als die mehreren Befestigungsbereiche (36) der zweiten Zinkeneinrichtungen (22) sind, vorzugsweise um mindestens 20 %, 30 %, 50 %, 80% oder 100 %.

14. Landwirtschaftliche Bodenbearbeitungsmaschine (10) nach einem der Ansprüche 11 bis 13, wobei:
die mehreren ersten Zinkeneinrichtungen (24) in mindestens einer Querreihe quer zu der Arbeitsrichtung (A1) nebeneinander angeordnet sind; und/oder
die mehreren ersten Zinkeneinrichtungen (24) bezüglich einer Arbeitsrichtung (A1) der Bodenbearbeitungsmaschine (10) die letzten Zinkeneinrichtungen der Bodenauflockerungsvorrichtung (12) sind.

15. Landwirtschaftliche Bodenbearbeitungsmaschine (10) nach einem der Ansprüche 11 bis 14, wobei:
die mehreren ersten Zinkeneinrichtungen (24) und die mehreren zweiten Zinkeneinrichtungen (22) mindestens ein Gleichteil aufweisen, vorzugsweise ein, bevorzugt hakenförmiges, Stielteil (52) des jeweiligen Zinkenstiels (38, 38'), ein Schar (42), einen als Halterung ausgeführten Befestigungsbereich (36) zum lösbaren Anbringen der jeweiligen Zinkeneinrichtung am Rahmen (18), eine Vorspanneinrichtung (40) und/oder ein Gelenk (56).

16. Landwirtschaftliche Bodenbearbeitungsmaschine (10', 10") nach einem der Ansprüche 11 bis 15, wobei:
der Rahmen (18) einen Querträger (32) aufweist und die mehreren ersten Zinkeneinrichtungen (24) und die mehreren zweiten Zinkeinrichtungen (22) lösbar an dem Querträger (32) angebracht sind, vorzugsweise zum Bilden einer einbalkigen, zweireihigen Bodenbearbeitungsmaschine (10') und/oder Bodenauflockerungsvorrichtung (12); oder
der Rahmen (18) einen ersten Querträger (32) und einen zweiten Querträger aufweist, die mehreren ersten Zinkeneinrichtungen (24) teilweise lösbar an dem ersten Querträger (32) und teilweise lösbar an dem zweiten Querträger angebracht sind, und die mehreren zweiten Zinkeneinrichtungen (22) teilweise lösbar an dem ersten Querträger (32) und teilweise lösbar an dem zweiten Querträger angebracht sind, vorzugsweise zum Bilden einer zweibalkigen, vierreihigen Bodenbearbeitungsmaschine (10) und/oder Bodenauflockerungsmaschine (12).

17. Landwirtschaftliche Bodenbearbeitungsmaschine (10) nach einem der Ansprüche 11 bis 16, wobei:
die mehreren zweiten Zinkeneinrichtungen (22) in mehreren, vorzugsweise zwei oder drei, voneinander beabstandeten Querreihen quer zur Arbeitsrichtung (A1) angeordnet sind; und optional:
die mehreren ersten Zinkeneinrichtungen (24) in einer einzigen Querreihe quer zur Arbeitsrichtung (A1) angeordnet sind; oder
die mehreren ersten Zinkeneinrichtungen (24) in mehreren Querreihen quer zur Arbeitsrichtung (A1) angeordnet sind.

18. Landwirtschaftliche Bodenbearbeitungsmaschine (10) nach einem der Ansprüche 11 bis 17, wobei:
die mehreren ersten Zinkeneinrichtungen (24) und die mehreren zweiten Zinkeneinrichtungen (22) die einzigen Zinkeneinrichtungen der Bodenauflockerungsvorrichtung (12) und/oder der Bodenbearbeitungsmaschine (10) sind; und optional
die Bodenauflockerungsvorrichtung (12) die einzige Bodenauflockerungsvorrichtung der Bodenbearbeitungsmaschine (10) ist.

19. Landwirtschaftliche Bodenbearbeitungsmaschine (10) nach einem der Ansprüche 10 bis 18, ferner aufweisend:
eine Bodeneinebnungsvorrichtung (14) zur Einebnung des von der Bodenauflockerungsvorrichtung (12) aufgelockerten Bodens, wobei die Bodeneinebnungsvorrichtung (14) bezüglich der Arbeitsrichtung (A1) hinter der Bodenauflockerungsvorrichtung (12) angeordnet ist.

20. Landwirtschaftliche Bodenbearbeitungsmaschine (10) nach Anspruch 19, wobei:
die mehreren ersten Zinkeneinrichtungen (24) entgegen der Arbeitsrichtung (A1) näher zu der Bodeneinebnungsvorrichtung (14) angeordnet sind als die mehreren zweiten Zinkeneinrichtungen (22); und/oder
ein Abstand zwischen den mehreren ersten Zinkeneinrichtungen (24) und der Bodeneinebnungsvorrichtung (14) bezüglich der Arbeitsrichtung (A1) kleiner oder im Wesentlichen gleich 2000 mm, 1500 mm, 1000m, 500 mm, 400 mm oder 350 mm ist.

21. Landwirtschaftliche Bodenbearbeitungsmaschine (10) nach Anspruch 19 oder Anspruch 20, ferner aufweisend:
eine Bodenrückverfestigungsvorrichtung (16), vorzugsweise aufweisend eine Packerwalze (28), zum Rückverfestigen des von der Bodeneinebnungsvorrichtung (14) eingeebneten Bodens, wobei die Bodenrückverfestigungsvorrichtung (16) bezüglich der Arbeitsrichtung (A1) hinter der Bodeneinebnungsvorrichtung (14) angeordnet ist.

22. Landwirtschaftliche Bodenbearbeitungsmaschine (10) nach einem der Ansprüche 11 bis 21, ferner aufweisend:
ein, vorzugweise hinteres und/oder liftbares, Fahrwerksrad (20),
wobei:
das Fahrwerksrad (20) und die mehreren ersten Zinkeneinrichtungen (24) in einer gemeinsamen Querreihe quer zu der Arbeitsrichtung (A1) angeordnet sind, oder die mehreren ersten Zinkeneinrichtungen (24) bezüglich der Arbeitsrichtung (A1) hinter dem Fahrwerksrad (20) angeordnet sind; und/oder
die mehreren zweiten Zinkeneinrichtungen (22) bezüglich der Arbeitsrichtung (A1) vor dem Fahrwerksrad (20) angeordnet sind, oder das Fahrwerksrad (20) und die mehreren zweiten Zinkeneinrichtungen (24) in einer gemeinsamen Querreihe quer zu der Arbeitsrichtung (A1) angeordnet sind.

23. Landwirtschaftliche Bodenbearbeitungsmaschine (10) nach Anspruch 22, wobei:
das Fahrwerksrad (20) bezüglich der Arbeitsrichtung (A1) ein hinteres Ende aufweist, und die mehreren ersten Zinkeneinrichtungen (24) so lang sind, dass sie entgegen der Arbeitsrichtung (A1) im Wesentlichen an das hintere Ende heranreichen oder über das hintere Ende hinaus überstehen; und/oder
das Fahrwerksrad (20) innerhalb des Rahmens (18) angeordnet ist.
